(19) Europäisches Patentamt
European Patent Office
Office européen des brevets

(11) **EP 4 693 924 A1**

(12) **EUROPEAN PATENT APPLICATION**
published in accordance with Art. 153(4) EPC

(43) Date of publication:
**11.02.2026  Bulletin 2026/07**

(21) Application number: **23932014.6**

(22) Date of filing: **05.04.2023**

(51) International Patent Classification (IPC):
*H04B 7/0456* (2017.01)

(52) Cooperative Patent Classification (CPC):
**H04B 7/0456**

(86) International application number:
**PCT/JP2023/014136**

(87) International publication number:
**WO 2024/209603 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Chiyoda-ku**
**Tokyo 100-6150 (JP)**

(72) Inventors:
• **MATSUMURA, Yuki**
  **Tokyo 100-6150 (JP)**

• **SHIBAIKE, Naoya**
  **Tokyo 100-6150 (JP)**
• **NAGATA, Satoshi**
  **Tokyo 100-6150 (JP)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)     A terminal according to an aspect of the present disclosure includes: a receiving section that receives downlink control information including information related to a codebook subset indicating a precoder for up to four layers and a precoder for up to eight layers; and a control section that judges, based on the precoder indicated by the information, a precoder for eight ports for an uplink transmission, wherein a configuration is indicated in common for a configuration for the up to four layers and a configuration for the up to eight layers. An aspect of the present disclosure enables UL transmission using more than four antenna ports to be appropriately controlled.

| Bit field mapped to index | codebookSubset= partialCoherent with Ng=2 |
|---|---|
| 0 | 1 layer, TPMI 0 |
| 1 | 1 layer, TPMI 1 |
| ... | ... |
| M | 4 layer, TPMI a |
| M+1 | 5 layer, TPMI b |
| ... | ... |
| $2^{Ng2}$ | ... |
|  |  |
|  |  |

PARTIAL-COHERENT PRECODER
for Ng=2

FIG. 19

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In Rel-15 NR, uplink (UL) Multi Input Multi Output (MIMO) transmission with up to four layers is supported. For future NR, in order to achieve higher spectral efficiency, it is under study to support UL transmission with more than four layers. For example, for Rel-18 NR, transmission with up to 6 ranks using six antenna ports, transmission with up to 6 or 8 ranks using eight antenna ports, and the like are under study.

In existing standards, it is required to support a unified design for a table (codebook) of precoding matrix, a unified design in notification of downlink control information related to determination of the precoding matrix, and the like.

However, such unified designs may inhibit individual preferable configurations for the precoding matrix or may cause an increase in bit size of the downlink control information, causing an increase in communication throughput to be suppressed.

In view of this, the present disclosure has one object to provide a terminal, a radio communication method, and a base station that enable UL transmission using more than four antenna ports to be appropriately controlled.

Solution to Problem

A terminal according to an aspect of the present disclosure includes: a receiving section that receives downlink control information including information related to a codebook subset indicating a precoder for up to four layers and a precoder for up to eight layers; and a control section that judges, based on the precoder indicated by the information, a precoder for eight ports for an uplink transmission, wherein a configuration is indicated in common for a configuration for the up to four layers and a configuration for the up to eight layers.

Advantageous Effects of Invention

An aspect of the present disclosure enables UL transmission using more than four antenna ports to be appropriately controlled.

Brief Description of Drawings

[FIG. 1] FIG. 1 is a diagram to show an example of a table of precoding matrix W for single-layer (rank 1) transmission using four antenna ports with a transform precoder disabled, in Rel-16 NR.

[FIG. 2] FIG. 2 is a diagram to show an example of a table of precoding matrix W for 2-layer (rank 2) transmission using four antenna ports with a transform precoder disabled, in Rel-16 NR.

[FIG. 3] FIG. 3 is a diagram to show an example of a table of precoding matrix W for 3-layer (rank 3) transmission using four antenna ports with a transform precoder disabled, in Rel-16 NR.

[FIG. 4] FIG. 4 is a diagram to show an example of a table of precoding matrix W for 4-layer (rank 4) transmission using four antenna ports with a transform precoder disabled, in Rel-16 NR.

[FIG. 5] FIG. 5A is a diagram to show an example of a table of precoding matrix W for single-layer (rank 1) transmission using two antenna ports, in Rel-16 NR. FIG. 5B is a diagram to show an example of a table of precoding matrix W for 2-layer (rank 2) transmission using two antenna ports with transform precoding disabled, in Rel-16 NR.

[FIG. 6] FIG. 6 is a diagram to show an example of a correspondence relation between a precoding-information-and-number-of-layers field value and the number of layers and a TPMI, in Rel-16 NR.

[FIG. 7] FIGS. 7A to 7C are each a diagram to show SRI indication or second SRI indication in codebook based PUSCH transmission, in Rel. 17.

[FIG. 8] FIG. 8 is a diagram to show an example of antenna layouts of eight antenna ports.

[FIG. 9] FIG. 9 is a diagram to show an example of a table to be used for determination of the number of layers/TPMI index in a case of supporting more than four antenna ports.

[FIG. 10] FIGS. 10A and 10B are diagrams to show examples of a table of precoding matrix W for 1- and 8-layer (ranks 1 and 8) transmissions, respectively, that use eight antenna ports with transform precoding disabled. FIG. 10C is a diagram to show an example of a correspondence relation between a precoding-information-and-number-of-layers field value and the number of layers and a TPMI.

[FIG. 11] FIGS. 11A to 11C are each a diagram to show an example of a table of precoding matrix W for 1-layer (rank 1) transmission using eight antenna ports with transform precoding disabled. FIGS. 11D to 11F are each a diagram to show an example of a table of precoding matrix W for 8-layer (rank 8) transmission using eight antenna ports with transform precoding disabled.

[FIG. 12] FIGS. 12A to 12D are each a diagram to show an example of a correspondence relation between a precoding-information-and-number-of-layers field value and a content identified.

[FIG. 13] FIG. 13 is a diagram to show another example of the correspondence relation between a precoding-information-and-number-of-layers field value and the number of layers and a TPMI.

[FIG. 14] FIG. 14A is a diagram to show an example of a new precoder of three layers obtained by re-using an existing 4-port partial-coherent precoder. FIG. 14B is a diagram to show an example of a 6-layer precoder with four layers from one coherent group and two layers from another coherent group.

[FIG. 15] FIG. 15A is a diagram to show an example of a 4-layer precoder with two layers from one coherent group and two layers from another coherent group. FIG. 15B is a diagram to show an example of an 8-layer precoder with four 2-layer precoders from four coherent groups.

[FIG. 16] FIG. 16A is a diagram to show the numbers of existing 4-port precoders shown in FIGS. 1 to 4. FIG. 16B is a diagram to show the numbers of existing 2-port precoders shown in FIGS. 5A and 5B.

[FIG. 17] FIG. 17 is a diagram to show an example of a correspondence relation between a precoding-information-and-number-of-layers field value and the number of layers and a TPMI.

[FIG. 18] FIGS. 18A and 18B are each a diagram to show an example of a DCI field for precoder indication.

[FIG. 19] FIG. 19 is a diagram to show an example of a correspondence relation between a precoding-information-and-number-of-layers field value and the number of layers and a TPMI according to a first embodiment.

[FIG. 20] FIG. 20 is a diagram to show an example of a DCI field for precoder indication according to the first embodiment.

[FIG. 21] FIG. 21 is a diagram to show an example of a correspondence relation between a rank and a layer splitting case and a field A according to the first embodiment.

[FIG. 22] FIGS. 22A and 22B are each a diagram to show another example of the correspondence relation between a precoding-information-and-number-of-layers field value and the number of layers and a TPMI according to the first embodiment.

[FIG. 23] FIGS. 23A and 23B are each a diagram to show another example of the DCI field for precoder indication according to the first embodiment.

[FIG. 24] FIG. 24 is a diagram to show an example of a correspondence relation between a precoding-information-and-number-of-layers field value and the number of layers and a TPMI according to a second embodiment.

[FIG. 25] FIG. 25 is a diagram to show an example of a correspondence relation between a rank and a layer splitting case and a field A according to the second embodiment.

[FIG. 26] FIG. 26 is a diagram to show another example of the correspondence relation between a rank and a layer splitting case and a field A according to the second embodiment.

[FIG. 27] FIG. 27 is a diagram to show an example of a schematic structure of a radio communication system according to one embodiment.

[FIG. 28] FIG. 28 is a diagram to show an example of a structure of a base station according to one embodiment.

[FIG. 29] FIG. 29 is a diagram to show an example of a structure of a user terminal according to one embodiment.

[FIG. 30] FIG. 30 is a diagram to show an example of a hardware structure of the base station and the user terminal according to one embodiment.

[FIG. 31] FIG. 31 is a diagram to show an example of a vehicle according to one embodiment.

Description of Embodiments

(Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic SRS (Aperiodic SRS (A-SRS)). Note that the UE may transmit a P-SRS and an SP-SRS periodically (or periodically after activation), and transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission (codebook-based transmission), the UE may determine a precoder (precoding matrix) for the PUSCH transmission on the basis of an SRI, a transmitted rank indicator (TRI), and a transmitted precoding matrix indicator (TPMI). In a case of non-codebook based transmission (non-codebook-based transmission), the UE may determine a precoder for the PUSCH transmission on the basis of an

SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

With respect to a certain SRS resource, in a case where the UE is configured with spatial relation information related to an SSB or CSI-RS and the SRS, the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a certain SRS (target SRS) resource, in a case where the UE is configured with spatial relation information related to another SRS (reference SRS) and the SRS (target SRS), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

The UE may determine, based on a value of a certain field (for example, SRS resource indicator (SRI) field) in DCI (for example, DCI format 0_1), a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the certain field.

In Rel-15/16 NR, in a case where codebook based transmission is used for a PUSCH, the UE may be configured with an SRS resource set for codebook usage including two SRS resources at maximum by RRC, and may be indicated with one of the two SRS resources at maximum by DCI (SRI field of 1 bit). A transmit beam for the PUSCH is specified by an SRI field.

The UE may judge a TPMI and the number of layers (transmission rank) for the PUSCH on the basis of a precoding-information-and-number-of-layers field (hereinafter, also referred to as a precoding information field). From a codebook for uplink regarding the number of ports the same as the number of SRS ports indicated by a higher layer parameter "nrofSRS-Ports" configured for an SRS resource specified by the SRI field described above, the UE may select a precoder on the basis of the TPMI, the number of layers, and the like.

In Rel-15/16 NR, in a case where non-codebook based transmission is used for a PUSCH, the UE may be configured with an SRS resource set for non-codebook usage including four SRS resources at maximum by RRC, and may be indicated with one or more of the four SRS resources at maximum by DCI (SRI field of 2 bits).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

(Determination of PUSCH Precoder in Codebook (CB) Based Transmission)

As described above, in a case of codebook (CB) based transmission, a UE may determine a precoder for PUSCH transmission on the basis of an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by a precoding-information-and-number-of-layers field ("Precoding information and number of layers" field) of the DCI. For simplicity, the precoding-information-and-number-of-layers field is also referred to as a precoding information field.

The UE may report UE capability information related to a precoder type and be configured, by a base station, with the precoder type based on the UE capability information by higher layer signaling. The UE capability information may be information about a precoder type to be used by the UE in the PUSCH transmission (for example, which may be indicated by an RRC parameter "pusch-TransCoherence").

The UE may determine a precoder to be used for the PUSCH transmission on the basis of information about a precoder type (for example, an RRC parameter "codebookSubset") included in PUSCH configuration information (for example, "PUSCH-Config" information element of RRC signaling) notified by higher layer signaling. The UE may be configured with a subset of a PMI specified by the TPMI, by codebookSubset.

Note that the precoder type may be specified by any one of full coherent (fully coherent), partial coherent, and non-coherent (non coherent), or a combination of at least two of them (which may be indicated, for example, by a parameter such as "fullyAndPartialAndNonCoherent" or "partialAndNonCoherent").

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent," "partialAndNonCoherent," or "nonCoherent."

Full coherent may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

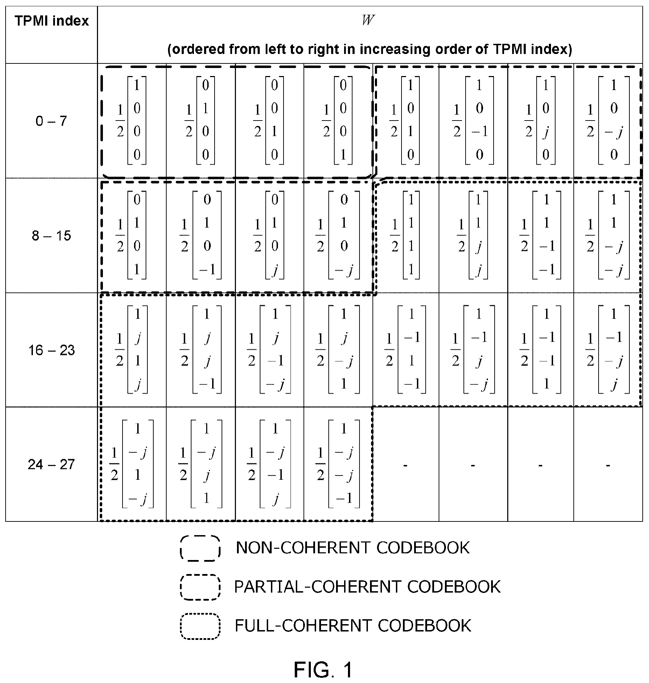

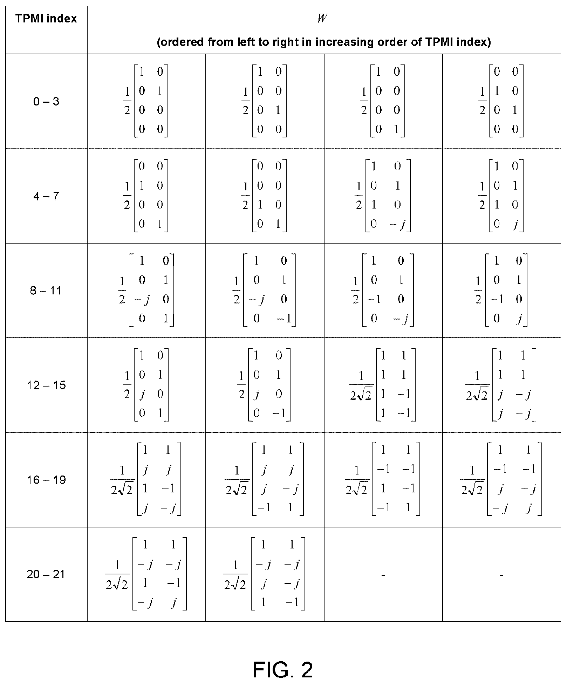

FIG. 1 is a diagram to show an example of association between codebook subsets and TPMI indices. FIG. 1 corresponds to a table of precoding matrix W for single-layer (rank 1) transmission using four antenna ports with transform precoding (which may be referred to as a transform precoder) being disabled, in Rel-16 NR. In FIG. 1, corresponding W is shown, from left to right in increasing order of TPMI indices (this similarly applies to FIG. 2).

Such a correspondence relation (which may be referred to as a table) indicating W corresponding to TPMI indices as shown in FIG. 1 is also referred to as a codebook. Part of the codebook is also referred to as a codebook subset.

In FIG. 1, in a case where the codebook subset (codebookSubset) is fullyAndPartialAndNonCoherent, a UE is notified of a TPMI (TPMI index) of any one of 0 to 27, for single-layer transmission. In a case where the codebook subset is partialAndNonCoherent, the UE is configured with a TPMI of any one of 0 to 11, for single-layer transmission. In a case where the codebook subset is nonCoherent, the UE is configured with a TPMI of any one of 0 to 3, for single-layer transmission.

In FIG. 1, in a case where a TPMI of any one of 0 to 3 is notified, a non-coherent precoder is applied. In a case where a TPMI of any one of 4 to 11 is notified, a partial-coherent precoder is applied. In a case where a TPMI of any one of 12 to 27 is notified, a full-coherent precoder is applied.

FIGS. 2 to 4 correspond to tables of precoding matrix W for 2- to 4-layer (ranks 2 to 4) transmissions, respectively, that use four antenna ports with transform precoding disabled, in Rel-16 NR.

In FIG. 2, TPMIs that a UE is notified of for 2-layer transmission are 0 to 21 (the codebook subset is fullyAndPartialAndNonCoherent), 0 to 13 (the codebook subset is partialAndNonCoherent), or 0 to 5 (the codebook subset is nonCoherent).

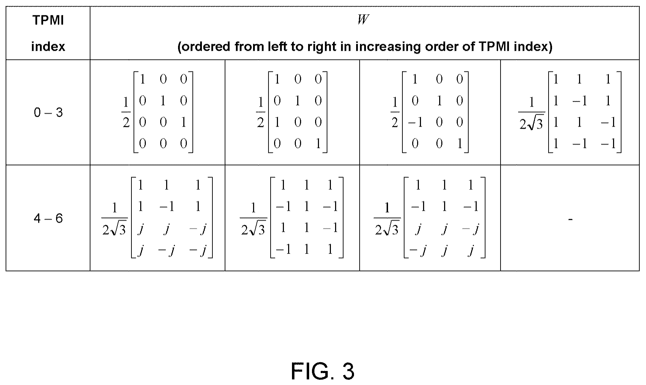

In FIG. 3, TPMIs that a UE is notified of for 3-layer transmission are 0 to 6 (the codebook subset is fullyAndPartialAndNonCoherent), 0 to 2 (the codebook subset is partialAndNonCoherent), or 0 (the codebook subset is nonCoherent).

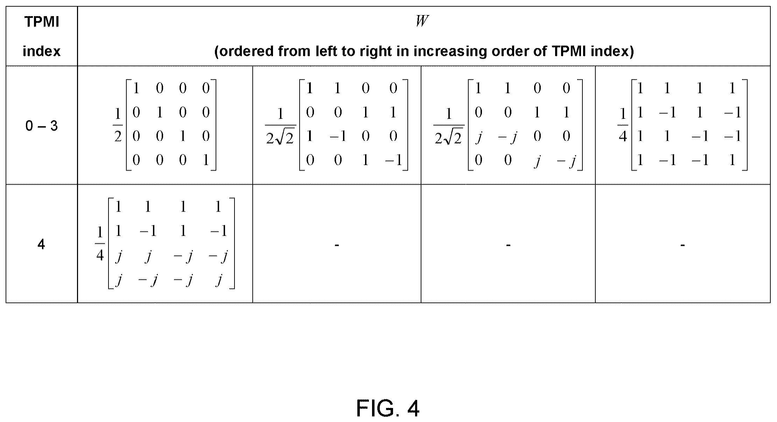

In FIG. 4, TPMIs that a UE is notified of for 4-layer transmission are 0 to 4 (the codebook subset is fullyAndPartialAndNonCoherent), 0 to 2 (the codebook subset is partialAndNonCoherent), or 0 (the codebook subset is nonCoherent).

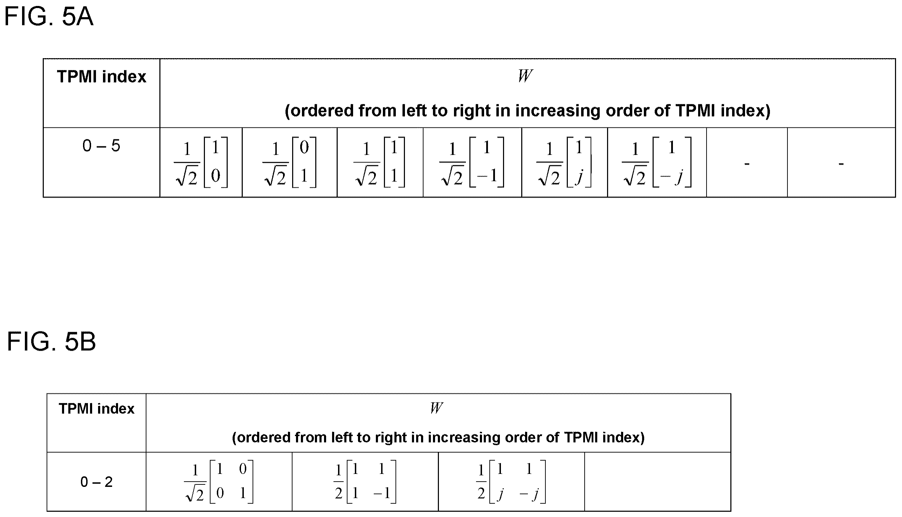

FIG. 5A corresponds to a table of precoding matrix W for single-layer (rank 1) transmission using two antenna ports, in Rel-16 NR. FIG. 5B corresponds to a table of precoding matrix W for 2-layer (rank 2) transmission using two antenna ports with transform precoding disabled, in Rel-16 NR.

In FIG. 5A, TPMIs that a UE is notified of for 2-port single-layer transmission are 0 to 5 (the codebook subset is fullyAndPartialAndNonCoherent) or 0 to 1 (the codebook subset is nonCoherent). In a case where TPMIs notified are 0 to 1, a non-coherent precoder is applied. In a case where TPMIs notified are 2 to 5, a full-coherent precoder is applied.

In FIG. 5B, TPMIs that a UE is notified of for 2-port 2-layer transmission are 0 to 2 (the codebook subset is fullyAndPartialAndNonCoherent) or 0 (the codebook subset is nonCoherent).

Note that a precoding matrix with only one of the components in each column being other than 0 may be referred to as a non-coherent codebook. A precoding matrix with only a specific number of the components in each column (more than one but not all the components in a column) being other than 0 may be referred to as a partial-coherent codebook. A precoding matrix with none of the components in each column being 0 may be referred to as a full-coherent codebook.

The non-coherent codebook and the partial-coherent codebook may each be referred to as an antenna selection precoder, an antenna port selection precoder, or the like. For example, the non-coherent codebook (non-coherent precoder) may be referred to as a one-port selection precoder, a one-port port selection precoder (1-port port selection precoder), or the like. The partial-coherent codebook (partial-coherent precoder) may be referred to as an x-port selection precoder (x is an integer greater than one), an x-port port selection precoder, or the like. The full-coherent codebook may be referred to as a non-antenna selection precoder, an all-port precoder, or the like. In the present disclosure, a codebook, a codebook subset, and a precoder may be interchangeably interpreted.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the full-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a full-coherent codebook subset (for example, the RRC parameter "codebookSubset" = "fullyAndPartialAndNonCoherent").

Note that, as seen from FIGS. 5A and 5B, no partial-coherent precoder for 2-antenna-port transmission is present, and thus a configuration of the codebook subset being partialAndNonCoherent need not be applied to the two antenna ports.

(Precoding Information Field)

As described above, a UE may judge, based on a precoding information field of DCI (for example, DCI format 0_1/0_2) scheduling a PUSCH, a TPMI and the number of layers (transmission rank) for the PUSCH.

Regarding a codebook based PUSCH, the number of bits of the precoding information field may be judged (may fluctuate) based on a configuration of enabling/disabling a transform precoder for the PUSCH (for example, a higher layer parameter "transformPrecoder"), a configuration of a codebook subset for the PUSCH (for example, a higher layer parameter "codebookSubset"), a configuration of the maximum number of layers for the PUSCH (for example, a higher layer parameter "maxRank"), a configuration of uplink full power transmission for the PUSCH (for example, a higher layer parameter "ul-FullPowerTransmission"), the number of antenna ports for the PUSCH, or the like.

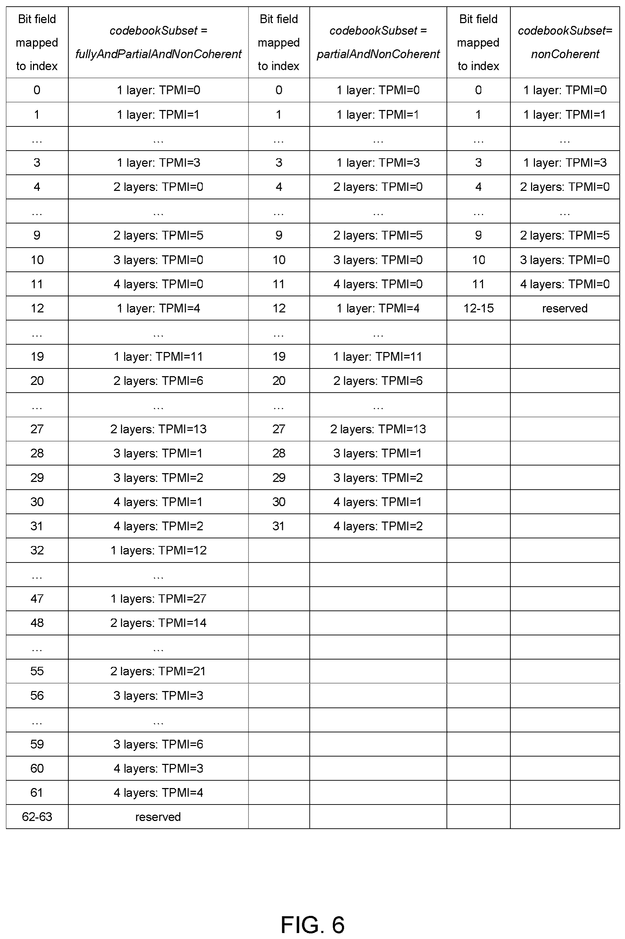

FIG. 6 is a diagram to show an example of a correspondence relation between a precoding-information-and-number-of-layers field value and the number of layers and a TPMI, in Rel-16 NR. The correspondence relation in this example is a correspondence relation for four antenna ports for a case where a transform precoder is configured to be disabled, where maximum rank (maxRank) is configured with 2, 3, or 4, and where no uplink full power transmission is configured or uplink full power transmission is configured with full power mode 2 (fullpowerMode2) or full power (fullpower), but the example is not limited to this. Note that it should be understood by those skilled in the art that "Bit field mapped to index" shown in FIG. 6 indicates the values in the precoding-information-and-number-of-layers field.

In FIG. 6, the precoding information field has 6 bits in a case where a codebook subset of full coherent (fullyAndPartialAndNonCoherent) is configured for a UE, has 5 bits in a case where a codebook subset of partial coherent (partialAndNonCoherent) is configured, and has 4 bits in a case where a codebook subset of non-coherent (nonCoherent) is configured.

Note that, as shown in FIG. 6, the number of layers and a TPMI that correspond to a certain precoding information field value may be the same (common) irrespective of the codebook subset configured for the UE. For example, in FIG. 6, the numbers of layers and TPMIs that are indicated with precoding information field values = 0 to 11 may be the same for the codebook subsets of full coherent (fullyAndPartialAndNonCoherent), partial coherent (partialAndNonCoherent), and non-coherent (nonCoherent). In FIG. 6, the numbers of layers and TPMIs that are indicated with precoding information field values = 0 to 31 may be the same for the codebook subsets of full coherent (fullyAndPartialAndNonCoherent) and partial coherent (partialAndNonCoherent).

Note that the precoding information field may have 0 bits for a non-codebook based PUSCH. The precoding information field may have 0 bits for a codebook based PUSCH with one antenna port.

(SRS Configuration for Codebook Based PUSCH)

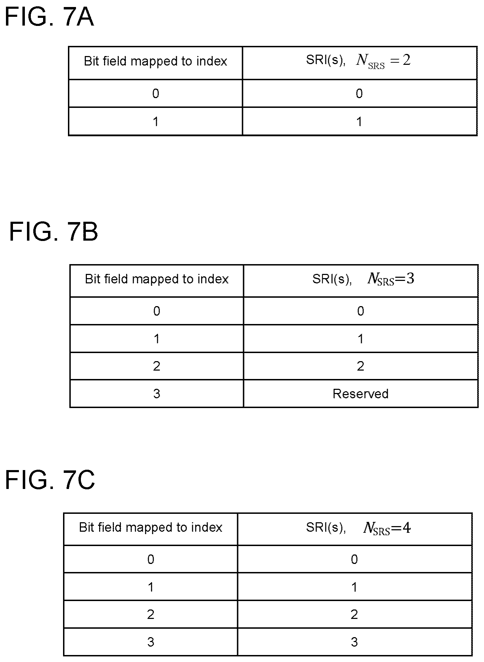

FIG. 7A is a diagram to show SRI indication or second SRI indication in codebook based PUSCH transmission for a case of no ul-FullPowerTransmission configured or ul-FullPowerTransmission = fullpowerMode1 or ul-FullPower-Transmission = fullpowerMode2 or ul-FullPowerTransmission = fullpower and $N_{SRS}$ = 2, in Rel. 17. FIG. 7B is a diagram to show SRI indication or second SRI indication for codebook based PUSCH transmission for a case of ul-FullPower-Transmission = fullpowerMode2 and $N_{SRS}$ = 3, in Rel. 17. FIG. 7C is a diagram to show SRI indication or second SRI indication for codebook based PUSCH transmission for a case of ul-FullPowerTransmission = fullpowerMode2 and $N_{SRS}$ = 4, in Rel. 17.

The SRI indication corresponds to an SRS resource indicator field of DCI and the second SRI indication corresponds to a Second SRS resource indicator field of DCI. The SRS resource set indicator field has 2 bits in a case where txConfig = nonCodeBook and there are two SRS resource sets that are configured with srs-ResourceSetToAdd-ModList and that are associated with "nonCodeBook" usage or where txConfig = codebook and there are two SRS resource sets that are configured with srs-ResourceSetToAddModList and that are associated with "codebook" usage. Otherwise, the SRS resource set indicator field has 0 bits.

The SRS resource indicator field has $[\log_2(N_{SRS})]$ bits in a case of the higher layer parameter txConfig = codebook, in accordance with FIGS. 7A to 7C. $N_{SRS}$ is the number of configured SRS resources in an SRS resource set indicated by the SRS resource set indicator field (if any). Otherwise, $N_{SRS}$ is the number of configured SRS resources associated with usage of a higher parameter of a value 'codeBook', in an SRS resource set configured with the higher layer parameter srs-ResourceSetToAddModList.

In codebook based transmission, a PUSCH is scheduled by DCI format 0_0, DCI format 0_1, or DCI format 0_2, or configured in a semi-fixed manner. Only one or two SRS resource sets can be configured in SRS-ResourceSetToAdd-ModList with usage "codebook" of a higher layer parameter of SRS-ResourceSet. Only one or two SRS resource sets can be configured in srs-ResourceSetToAddModListDCI-0-2 with parameter usage "codebook" of a higher layer of SRS-ResourceSet.

In a case where, in srs-ResourceSetToAddModList or srs-ResourceSetToAddModListDCI-0-2, usage of the higher layer parameter of SRS-ResourceSet is configured with "codebook" to configure two SRS resource sets, one or two SRIs and one or two TPMIs are provided by two SRS resource indication fields and two precoding information fields.

In accordance with an SRS resource set that PUSCH repetitions are associated with, the UE applies the indicated SRI(s) and TPMI(s) to one or more PUSCH repetitions. In a case where two SRS resource sets are configured in SRS-ResourceSetToAddModList or srs-ResourceSetToAddModListDCI-0-2 and usage of the higher layer parameter of SRS-ResourceSet is configured with "codebook", the UE does not expect that the numbers of SRS resources different between the two SRS resource sets are configured.

In codebook based transmission, only one SRS resource may be indicated based on an SRI from among an SRS resource set. Except for a case where the higher layer parameter "ul-FullPowerTransmission" is configured with "fullpowerMode2", the maximum number of configured SRS resources for codebook based transmission is two. In a case where an aperiodic SRS is configured for the UE, an SRS request field in DCI triggers transmission of an aperiodic SRS resource.

Except for the case where the higher layer parameter "ul-FullPowerTransmission" is configured with "fullpowerMode2", when a plurality of SRS resources are configured with "codebook" by SRS-ResourceSet, the UE expect that, for all the SRS resources, the higher layer parameter "nrofSRS-Port" of SRS-Resource in SRS-ResourceSet is configured with the same value.

In the case where the higher layer parameter "ul-FullPowerTransmission" is configured with "fullpowerMode2", (1) to (3) below are applied.

(1) In an SRS resource set configured with usage "codebook", a UE can configure one SRS resource or a plurality of SRS resources with the same or different numbers of SRS ports.
(2) In a case where a plurality of SRS resources are configured in an SRS resource set, for all the SRS resources in the SRS resource set configured with usage "codebook", up to two different spatial relations can be configured.
(3) Depending on capability of a UE, in an SRS resource set configured with usage "codebook", up to two or four SRS resources are supported.

For a typical codebook based PUSCH, one SRS resource set including two SRS resources with the same number of ports can be configured. In a case of codebook based PUSCH repetitions (for multi-transmission/reception point (multi-TRP)), two SRS resource sets including the same number of SRS resources may be configured. In a case of "fullpowerMode2" in codebook base, one SRS resource set and SRS resources with the same number of ports or different numbers of ports can be configured.

(Transmission with More Than Four Antenna Ports)

In Rel-15/16 NR, uplink (UL) Multi Input Multi Output (MIMO) transmission with up to four layers is supported. For future radio communication systems, in order to achieve higher spectral efficiency, it is under study to support UL transmission with more than four layers. For example, for Rel-18 NR, transmission with up to 6 ranks using six antenna ports, transmission with up to 6 or 8 ranks using eight antenna ports, and the like are under study.

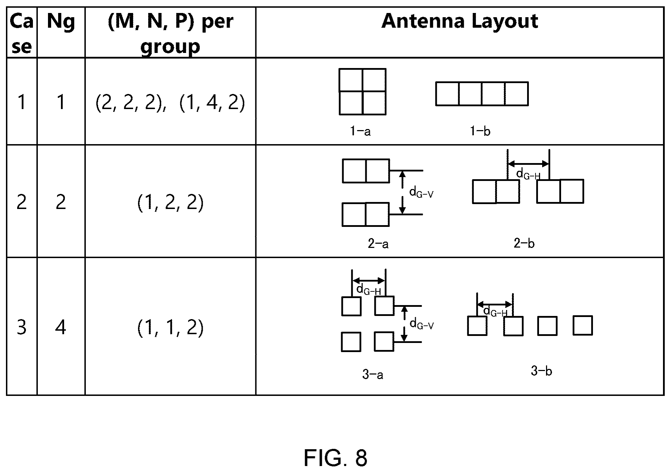

FIG. 8 is a diagram to show an example of antenna layouts of eight antenna ports. Ng is the number of antenna groups. M is the number of antennas (or antenna elements) in a first dimension. N is the number of antennas (or antenna elements) in a second dimension. For example, the first dimension and the second dimension are a horizontal direction and a vertical direction, respectively. P is the number of polarization planes. In a case of P = 2, a cross polarization antenna is used.

An antenna group may be referred to as a coherent group. A coherent group may include one or more coherent ports. For example, a partial-coherent UE may have a plurality of coherent groups. Antenna ports in a coherent group may be coherent with each other. Antenna ports between different coherent groups may not need to be coherent with each other.

The respective coherent groups may correspond to different transmission panels/transmission chains (Tx chains)/SRS resource sets/RS resource sets/pieces of spatial relation information (spatial relation infos)/joint Transmission Configuration Indication states (joint TCI states)/UL TCI states/reception TRPs. Here, the SRS resource sets may especially correspond to SRS resource sets pf codebook or non-codebook usage. The respective coherent groups may correspond to separate reception TRPs. A coherent group may be referred to as a coherent antenna group, a port group, an antenna group, or the like.

A UE may report an antenna group/antenna layout information/coherent number supported, as UE capability information. The UE may be configured with a coherent group (for example, the number of coherent groups and the number of ports included in each coherent group), by higher layer signaling.

Note that the antenna layout is not limited to the example shown in FIG. 8. For example, the number of panels that an antenna is disposed, panel orientation, coherency of each panel/antenna (such as full coherent, partial coherent, or non-coherent), an antenna layout in a specific direction (such as horizontal or vertical), and polarization antenna configuration (such as single polarization, cross polarization, and the number of polarization planes) may be different from those in the examples of FIGS. 7A and 7B. dG-H and dG-V respectively denote a horizontal gap and a vertical gap between centers of antenna groups adjacent to each other.

While, in Rel-15/16 NR, transmission with one codeword (CW) for one PUSCH is supported, for Rel-18 NR, it is under study that a UE transmits more than one CWs for one PUSCH. For example, supporting of 2CW transmission for ranks 5 to 8, supporting of 2CW transmission for ranks 2 to 8, and the like are under study.

Although, for a UE in Rel. 15 and Rel. 16, it is assumed that only one beam/panel is used for UL transmission at a certain time, for Rel. 17 or later versions, in order to improve UL throughput and reliability, simultaneous UL transmission (for example, PUSCH transmission) with a plurality of beams/panels for one or more TRPs is under study. Note that such simultaneous PUSCH transmission with a plurality of beams/panels may correspond to PUSCH transmission with more than four layers or may correspond to PUSCH transmission with four or less layers.

In addition, a precoding matrix for UL transmission using more than four antenna ports (antenna ports of the number of more than four) is under study. For example, a codebook for 8-port transmission (which may be referred to as an 8 transmission UL codebook (8TX UL codebook) or the like) is under study.

(Precoding Matrix Table)

For example, for i-layer (for example, i = 1, 2, ..., 8) transmission for UL with 8Tx/antenna ports, a precoding matrix (or TPMI matrix) and a TPMI index (or precoding matrix table) may be introduced/supported per i layers.

In this case, for a non-coherent precoder (for example, one-port port selection precoder (1-port port selection precoder)), in a case where the number of precoders with i layers is $X_{NC, i}$, a TPMI index corresponding to non-coherent may be 0 to $X_{NC, i}$ - 1.

For a partial-coherent precoder (for example, x-port port selection precoder (x = 2/4/6)), in a case where the number of precoders with i layers is $X_{PC, i}$, a TPMI index corresponding to a partial-coherent may be $X_{NC, i}$ to ($X_{NC, i}$ + $X_{PC, i}$ - 1).

For a full-coherent precoder, in a case where the number of precoders with i layers is $X_{FC, i}$, a TPMI index corresponding to a full-coherent may be ($X_{NC, i}$ + $X_{PC, i}$) to ($X_{NC, i}$ + $X_{PC, i}$ + $X_{FC, i}$ - 1 - 1).

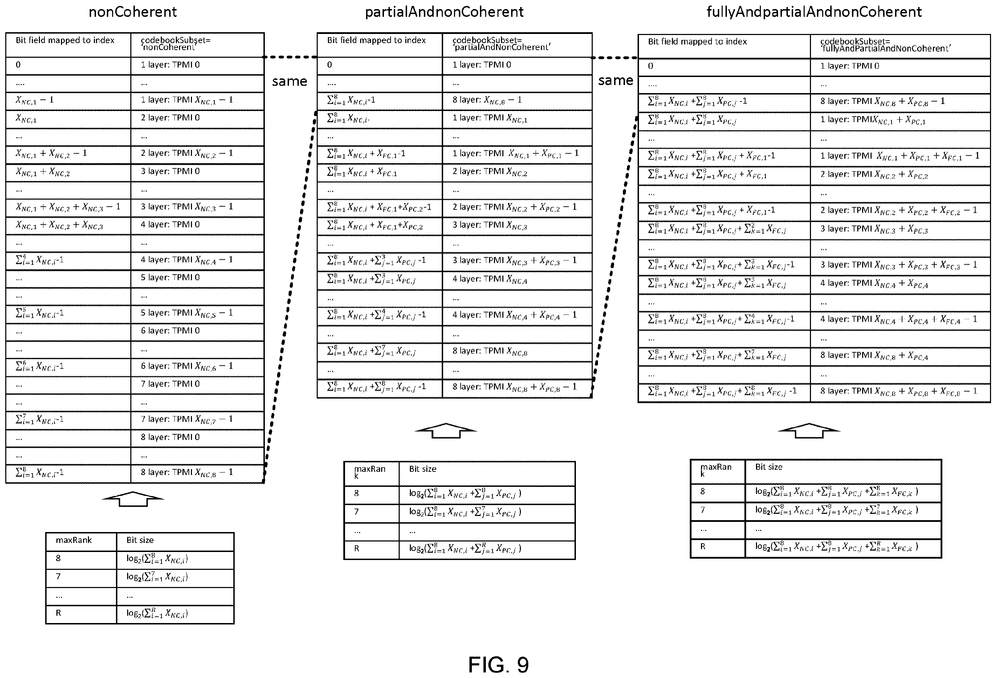

FIG. 9 is a diagram to show an example of a table to be used for determination of the number of layers/TPMI index in a case of supporting more than four antenna ports. More specifically, FIG. 9 is a diagram to show an example of association (or table) of a codepoint of a certain field (for example, precoding-information-and-number-of-layers field) in DCI and the number of layers/TPMI index.

FIG. 9 shows a case of eight antenna ports, of a transform precoder being disabled, and of maximum rank (for example, maxRank) being 2, 3, 4, 5, 6, 7, or 8. FIG. 9 may be applied to a case where no full power transmission (for example, ul-FullPowerTransmission) is configured, or full power mode 2 (for example, fullpowerMode2) is configured, or full power (for example, fullpower) is configured.

The bit size of a certain field in DCI may be defined to differ between a plurality of codebook subsets. In each codebook subset, based on maximum rank (for example, maxRank), the bit size may be defined/configured to differ.

The left part of FIG. 9 corresponds to a case where the codebook subset is nonCoherent. The center part of FIG. 9 corresponds to a case where the codebook subset is partialAndNonCoherent. The right part of FIG. 9 corresponds to a case where the codebook subset is fullyAndPartialAndNonCoherent.

FIG. 9 shows a case where the number of codepoints (or bit sizes) corresponding to the numbers of layers/TPMI indices for a case of the codebook subset being nonCoherent is less than that of another codebook subset (for example, partialAndNonCoherent/fullyAndPartialAndNonCoherent). In addition, FIG. 9 shows a case where the number of codepoints (or bit sizes) corresponding to the numbers of layers/TPMI indices for a case of the codebook subset being partialAndNonCoherent is less than that of another codebook subset (for example, fullyAndPartialAndNonCoherent).

In a case where the codebook subset is nonCoherent, one or more TPMI indices are defined for each layer. For example, for i layers, $X_{NC, i}$ TPMI indices may correspond/be configured. $X_{NC, i}$ may be the number of non-coherent precoders (Precoder number) corresponding to i layers.

In a case where the codebook subset is partialAndNonCoherent, for each layer, TPMI indices corresponding to partial coherent are defined in addition to TPMI indices corresponding to non-coherent. For example, for i layers, $X_{PC, i}$ TPMI indices may correspond/be configured in addition to $X_{NC,i}$ TPMI indices. $X_{PC,i}$ may be the number of partial-coherent precoders (Precoder number) corresponding to i layers.

In a case where the codebook subset is fullyAndPartialAndNonCoherent, for each layer, TPMIs corresponding to full coherent are defined in addition to TPMI indices corresponding to non-coherent and to TPMI indices corresponding to partial coherent. For example, for i layers, $X_{FC, i}$ TPMI indices may correspond/be configured in addition to $X_{NC, i}$ TPMI indices and $X_{PC, i}$ TPMI indices. $X_{FC,i}$ may be the number of full-coherent precoders (Precoder number) corresponding to i layers.

The number of TPMI indices (or precoders) supported may be separately configured depending on the number of layers. For example, for the larger number of layers, the smaller number of TPMI indices (or precoders) may be configured to be supported. In this case, for part of the numbers of layers, the number of TPMI indices supported may be the same.

As described above, codepoints corresponding to the numbers of layers/TPMI indices for a case of the codebook subset being nonCoherent may be applied to (or configured the same for) a case of the codebook subset being partialAndNonCoherent. In addition, codepoints corresponding to the numbers of layers/TPMI indices for a case of the codebook subset being partialAndNonCoherent may be applied to (or configured the same for) a case of the codebook subset being fullyAndPartialAndNonCoherent.

As described above, in a case where eight antenna ports/layers are supported in UL, a correspondence relation between at least part of the codepoints of a certain field in DCI and the number of layers/TPMI indices is configured for a plurality of codebook subsets in common. This enables an increase in overhead of the certain field in the DCI to be suppressed.

Each codepoint (or field index) of the certain field in the DCI indicates to a UE the number of layers and a TPMI index. Based on a value of a codepoint of the certain field in the DCI, the UE may judge the number of layers/TPMI index (or precoding matrix) to be used for UL transmission. A base station may indicate to the UE, using a codepoint of the certain field in the DCI, the number of layers/TPMI index (or precoding matrix) to be used for UL transmission.

The table shown in FIG. 9 may be applied to a specific case. For example, in a case where, by RRC/MAC CE/DCI, eight antenna ports/Txs/layers are configured for UL transmission (for example, PUSCH/SRS), the table of FIG. 9 may be applied. For cases other than this, a table for two/four antenna ports (for example, a table defined in Rel. 16 or earlier versions) may be applied.

Although, in FIG. 9, a case is shown where a combination of the number of layers and a TPMI index corresponds to a codepoint (or field index) of the certain field in the DCI, the example is not limited to this. A configuration may be used that the number of layers and a TPMI index have separate correspondence (or are indicated to the UE separately).

The numbers of TPMIs (or the numbers of precoders) $X_{NC, i}$, $X_{PC, i}$, and $X_{FC, i}$ supported in layers (for example, i layers) for eight antenna ports may be configured by RRC/MAC CE. In this case, the bit size of a certain field (for example, precoding-information-and-number-of-layers field) in DCI may be configured to be the same as a case of other antenna ports (for example, four antenna ports).

Alternatively, the bit size of the certain field in the DCI corresponding to eight antenna ports and the bit size of the certain field in the DCI corresponding to other antenna ports (for example, four antenna ports) may be configured separately (for example, differently).

Note that, although FIG. 9 shows a table for a case of maximum rank being 2, 3, 4, 5, 6, 7, or 8 for eight antenna ports, the example is not limited to this. For eight antenna ports, a table for a case of maximum rank being less than 8 (for example, a case of 2, 3, 4, 5, 6, 7) may be separately defined/configured. In this case, a table configuration may be used that corresponds to two or three codebook subsets.

In existing specifications, as shown in FIG. 6, one value of the number of layers (up to four layers) and one TPMI index can be specified, with one precoding information field, for a UE. For transmission with more than four antenna ports, it is under study to use a table other than that in FIG. 6 to specify one value of the number of layers (up to eight layers) and one TPMI index, with one precoding information field, for a UE. In this case, with respect to a table of precoding matrix W as shown in FIG. 1, prescribing a table with more than rank 4 allows 8-port transmission based on the number of layers and a TPMI index notified to be achieved.

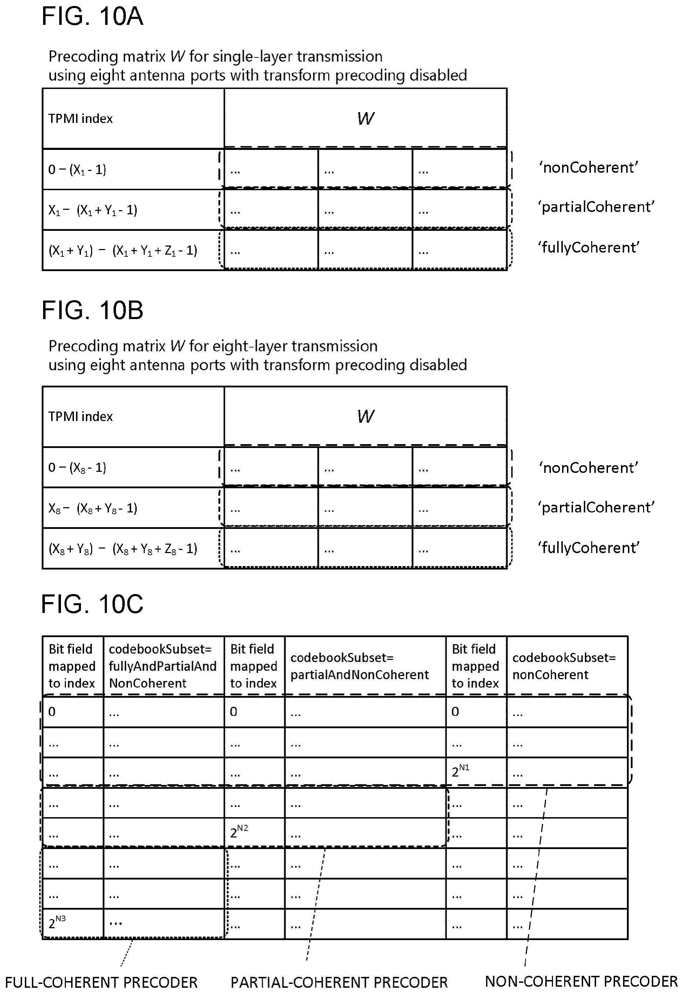

With reference to FIG. 10, a table generalized for 8-port transmission is described. FIGS. 10A and 10B are diagrams to show examples of a table of precoding matrix W for 1- and 8-layer (ranks 1 and 8) transmissions, respectively, that use eight antenna ports with transform precoding disabled.

In the present example (and following drawings similar to this), $X_i$ ($i$ is the number of layers) denotes the number of non-coherent precoders for the number $i$ of layers, $Y_i$ denotes the number of partial-coherent precoders for the number $i$ of layers, and $Z_i$ denotes the number of full-coherent precoders for the number $i$ of layers. Note that $X_i$, $Y_i$, and $Z_i$ shown in FIG. 10 and the following drawings may respectively correspond to $X_{NC, i}$, $X_{PC, i}$, and $X_{FC, i}$ in FIG. 9.

As shown in FIGS. 10A and 10B, a codebook for $i$ layers includes $X_i + Y_i + Z_i$ precoders, a non-coherent UE can reference, based on the codebook, to $X_i$ precoders in accordance with TPMI indices (from 0 to $X_i$ - 1), a partial-coherent UE can reference to $X_i + Y_i$ precoders in accordance with TPMI indices (from 0 to $X_i + Y_i$ - 1), and a full-coherent UE can reference to $X_i + Y_i + Z_i$ precoders in accordance with TPMI indices (from 0 to $X_i + Y_i + Z_i$ - 1).

FIG. 10C is a diagram to show an example of a correspondence relation between a precoding-information-and-number-of-layers field value and the number of layers and a TPMI. The correspondence relation in this example is a correspondence relation for eight antenna ports for a case where a transform precoder is configured to be disabled, where maximum rank (maxRank) is configured with a value of 5 or greater, and where no uplink full power transmission is configured or uplink full power transmission is configured with full power mode 2 (fullpowerMode2) or full power (fullpower), but the example is not limited to this. In FIG. 10C, although similar to FIG. 6, the number of layers of five or more may be specified. In FIG. 10C, a non-coherent precoder can be indicated with a field value (bit field mapped to an index) = 0 to $2^{N1}$. A partial-coherent precoder can be indicated with a field value = $2^{N1} + 1$ to $2^{N2}$. A full-coherent precoder can be indicated with a field value = $2^{N2} + 1$ to $2^{N3}$. Note that N1 to N3 may be integers.

In other words, in a case where the codebook subset is nonCoherent, field values = 0 to $2^{N1}$ are used. In a case where the codebook subset is partialAndNonCoherent, field values = 0 to $2^{N2}$ are used. Furthermore, in a case where the codebook subset is fullyAndPartialAndNonCoherent, field values = 0 to $2^{N3}$ are used.

For example, as shown in FIGS. 2 to 5, an existing codebook includes a plurality of (corresponding all) coherent precoders depending on TPMI indices.

A new codebook subset may include at least one of a codebook subset only for a full-coherent precoder and a codebook subset only for a partial-coherent precoder. The new codebook subset may include a codebook subset only for a non-coherent precoder. In other words, the new codebook subset may mean a codebook subset for a single coherency (or single coherent).

For example, a full-coherent UE may be configured with configuration information (for example, the RRC parameter "codebookSubset" indicating "fullyCoherent" or "fullyCoherentOnly") indicating a codebook subset only for a full-coherent precoder.

A partial-coherent UE may be configured with configuration information (for example, the RRC parameter "codebookSubset" indicating "partialCoherent" or "partialCoherentOnly") indicating a codebook subset only for a partial-coherent precoder.

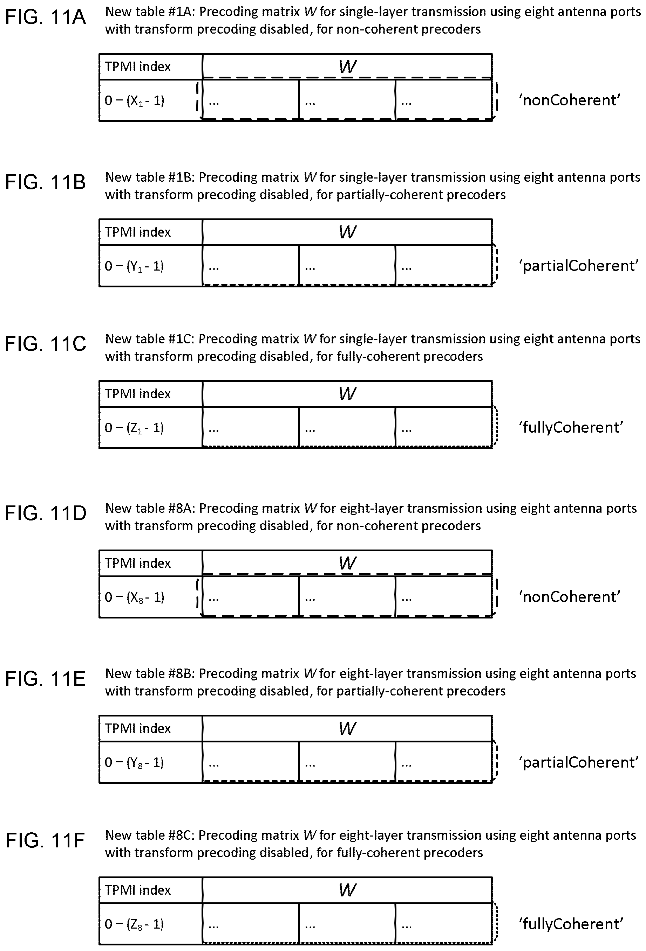

With reference to FIG. 11, a case is described that separate codebooks (precoding matrix tables) are defined depending on coherent types (for example, depending on UE's coherent types/configured codebook subset types).

FIGS. 11A to 11C are each a diagram to show an example of a table of precoding matrix W for 1-layer (rank 1) transmission using eight antenna ports with transform precoding disabled. FIGS. 11A, 11B, and 11C correspond to cases that a UE is configured with a codebook subset (nonCoherent) only for a non-coherent precoder, a codebook subset (partialCoherent) only for a partial-coherent precoder, and a codebook subset (fullyCoherent) only for a full-coherent precoder, respectively.

FIGS. 11D to 11F are each a diagram to show an example of a table of precoding matrix W for 8-layer (rank 8) transmission using eight antenna ports with transform precoding disabled. FIGS. 11D, 11E, and 11F correspond to cases that a UE is configured with a codebook subset (nonCoherent) only for a non-coherent precoder, a codebook subset (partialCoherent) only for a partial-coherent precoder, and a codebook subset (fullyCoherent) only for a full-coherent precoder, respectively.

In the present example, a codebook for a non-coherent precoder for $i$ layers includes $X_i$ precoders, and a non-coherent UE can reference, based on the codebook, to the $X_i$ precoders in accordance with TPMI indices. A codebook for a partial-coherent precoder for $i$ layers includes $Y_i$ precoders, and a partial-coherent UE can reference, based on the codebook, to the $Y_i$ precoders in accordance with TPMI indices. A codebook for a full-coherent precoder for $i$ layers includes $Z_i$ precoders, and a full-coherent UE can reference, based on the codebook, to the $Z_i$ precoders in accordance with TPMI indices.

For the sake of convenience, a table for a codebook for a non-coherent precoder for $i$ layers is referred to as table #iA, a table for a codebook for a partial-coherent precoder for $i$ layers is referred to as table #iB, and a table for a codebook for a full-coherent precoder for $i$ layers is referred to as table #iC. In each table, the TPMI indices may start from 0.

Note that, instead of separate tables used for the respective ones of the new codebook subsets as shown in FIGS.

11A to 11F, one table including full-/partial-/non-coherent precoders as shown in FIGS. 10A and 10B may be used for the new codebook subsets in common.

In existing NR, for example as shown in FIG. 6, a correspondence relation (for example, table) between a precoding information field value and the number of layers and a TPMI is identified, in accordance with a codebook subset configured for a UE. The UE judges, based on the correspondence relation, the number of layers and a TPMI index corresponding to a specified precoding information field. The UE determines, based on the number of layers, a table (codebook) to be referenced to for determination of a precoding matrix. In existing NR, such a correspondence relation is not possible to be associated with a codebook only for a full-coherent precoder, a codebook only for a partial-coherent precoder, or the like.

Separate new correspondence relations described above may be defined depending on coherent types/precoders (for example, depending on UE's coherent types/configured codebook subset types).

For a non-coherent UE/precoder/codebook subset, a new correspondence relation may include a row indicating the number of layers and a TPMI index (in a table of precoding matrix from one layer to eight layers only for a non-coherent precoder).

Note that, in the present disclosure, a case that a correspondence relation includes a row may mean that an index (row index, for example, precoding matrix field value) for the correspondence relation is associated with an entry (or element, for example, the number of layers and a TPMI index) indicated by the row.

For a full-coherent UE/precoder/codebook subset, a new correspondence relation may include a row indicating at least one of the following:

- a pair of the number of layers and a TPMI index (in a table of precoding matrix from one layer to eight layers only for a full-coherent precoder)
- a pair of the number of layers and a set of ($i_{1,1}$, $i_{1,2}$, $i_2$, and $i_{1,3}$)

Here, the set of ($i_{1,1}$, $i_{1,2}$, $i_2$, and $i_{1,3}$) may be used for, when a precoder W of a DL-type-I single-panel codebook is used as an 8TX UL full-coherent precoder, identification of the precoder, for example. These indices $i_{1,1}$, $i_{1,2}$, $i_2$, and $i_{1,3}$ may be defined the same as definition related to a DL-type-I single-panel codebook.

For a partial-coherent UE/precoder/codebook subset, a new correspondence relation may include a row indicating at least one of the following:

- a pair of the number of layers and a TPMI index (in a table of precoding matrix from one layer to eight layers only for a partial-coherent precoder)
- a pair of a pair of the numbers of layers (for different coherent groups) and one TPMI index
- a plurality of the numbers of layers (for different coherent groups)/a plurality of TPMI indices

Note that, for a partial-coherent UE/precoder/codebook subset, no new correspondence relation may be defined. In this case, for example, a partial-coherent UE may identify an 8-port precoder by re-using one or more existing precoders.

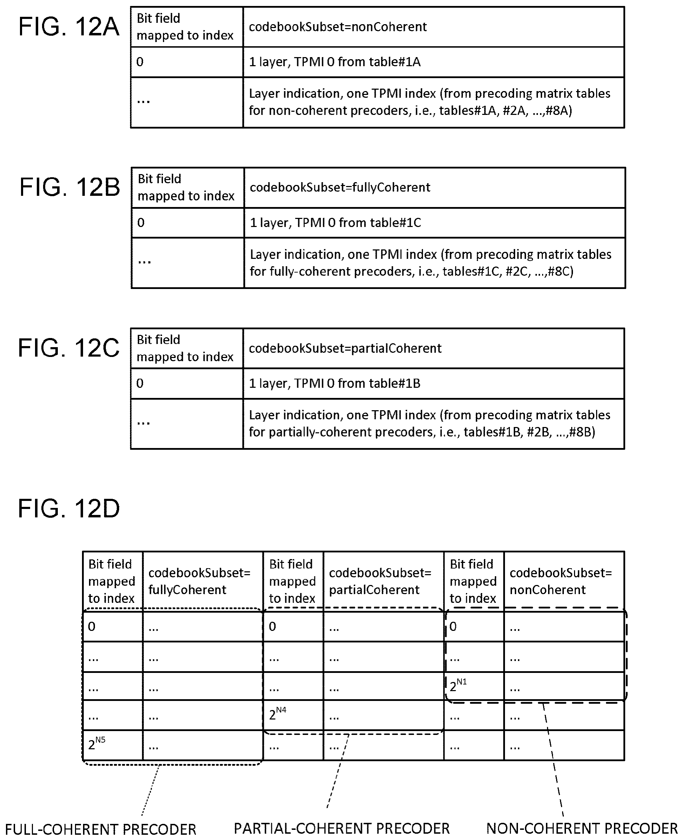

FIGS. 12A to 12D are each a diagram to show an example of a correspondence relation between a precoding-information-and-number-of-layers field value and a content identified. The correspondence relation in this example is a correspondence relation for eight antenna ports for a case where a transform precoder is configured to be disabled, where maximum rank (maxRank) is configured with up to 8, and where no uplink full power transmission is configured or uplink full power transmission is configured with full power mode 2 (fullpowerMode2) or full power (fullpower), but the example is not limited to this.

FIG. 12A shows a correspondence relation for a UE configured with a codebook subset (nonCoherent) only for a non-coherent precoder. In the correspondence relation of FIG. 12A, indication of the number of layers and a corresponding TPMI index are identified. The TPMI index indicates a TPMI index in table #iA, where i corresponds to indication of the number of layers described above.

FIG. 12B shows a correspondence relation for a UE configured with a codebook subset (fullyCoherent) only for a full-coherent precoder. In the correspondence relation of FIG. 12B, indication of the number of layers and a corresponding TPMI index are identified. The TPMI index indicates a TPMI index in table #iC, where i corresponds to indication of the number of layers described above.

FIG. 12C shows a correspondence relation for a UE configured with a codebook subset (partialCoherent) only for a partial-coherent precoder. In the correspondence relation of FIG. 12C, indication of the number of layers and a corresponding TPMI index are identified. The TPMI index indicates a TPMI index in table #iB, where i corresponds to indication of the number of layers described above.

Note that a case that a codebook subset only for a non-/partial-/full-coherent precoder is configured and a case that a codebook subset only for a non-/partial-/full-coherent precoder is indicated by DCI/MAC CE may be interchangeably interpreted. A reason for this is that, although each example in FIGS. 12A to 12C is appropriate for a case where a UE can be configured with only one new codebook subset, each example is not possible to be used as it is for a case where the UE can be configured with a plurality of new codebook subsets and any of the plurality of new codebook subsets is indicated by using a field (for example, which may be referred to as a codebook subset specification field or the like) in DCI/by using a MAC CE.

Correspondence relations of coherent types may be defined integrated in one table as shown in FIG. 6.

FIG. 12D is a diagram to show an example of a correspondence relation between a precoding-information-and-number-of-layers field value and a content identified. The correspondence relation in this example corresponds to a table that a full-coherent codebook subset (fullyAndPartialAndNonCoherent) in FIG. 6 is replaced with a codebook subset (fullyCoherent) only for a full-coherent precoder and a partial-coherent codebook subset (partialAndNonCoherent) is replaced with a codebook subset (partialCoherent) only for a partial-coherent precoder. Note that a bit field mapped to an index may have the number of bits different from that in FIG. 6.

Specifically, in FIG. 12D, a non-coherent precoder can be indicated with a field value (bit field mapped to an index) = 0 to $2^{N1}$. A partial-coherent precoder can be indicated with a field value = 0 to $2^{N4}$. A full-coherent precoder can be indicated with a field value = 0 to $2^{N5}$. Note that N1, N4, and N5 may be integers.

Part of the correspondence relation only for a non-coherent precoder in FIG. 12D may correspond to the correspondence relation in FIG. 12A. Part of the correspondence relation only for a full-coherent precoder in FIG. 12D may correspond to the correspondence relation in FIG. 12B. Part of the correspondence relation only for a partial-coherent precoder in FIG. 12D may correspond to the correspondence relation in FIG. 12C.

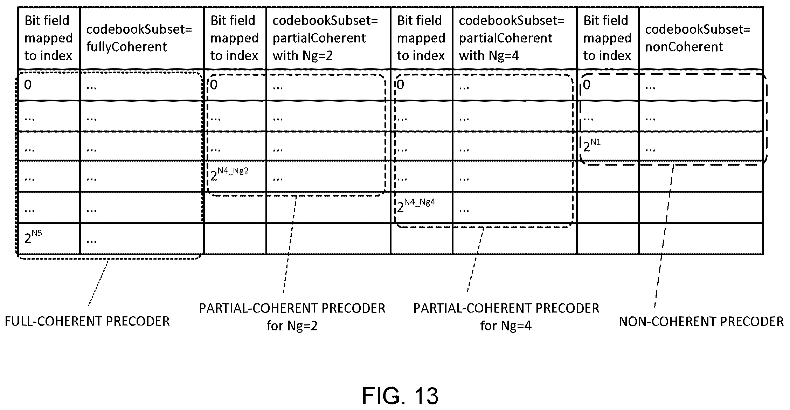

FIG. 13 is a diagram to show another example of the correspondence relation between a precoding-information-and-number-of-layers field value and the number of layers and a TPMI. The table in FIG. 13 shows an example that, in the table of FIG. 12D, partial-coherent codebook subsets are divided between Ng = 2 and Ng = 4 and extended.

Specifically, in FIG. 13, a non-coherent precoder can be indicated with a field value (bit field mapped to an index) = 0 to $2^{N1}$. A partial-coherent precoder corresponding to Ng = 2 can be indicated with a field value = 0 to $2^{N4\_Ng2}$. A partial-coherent precoder corresponding to Ng = 4 can be indicated with a field value = 0 to $2^{N4\_Ng4}$. A full-coherent precoder can be indicated with a field value = 0 to $2^{N5}$. Note that N1, N4_Ng2, N4_Ng4, and N5 may be integers.

As shown in FIG. 13, for the partial-coherent precoder corresponding to Ng = 2 and the partial-coherent precoder corresponding to Ng = 4, the respective separate tables/indications may be defined.

These tables enable a UE to appropriately recognize a table of precoding matrix to be referenced to on the basis of a precoding information field.

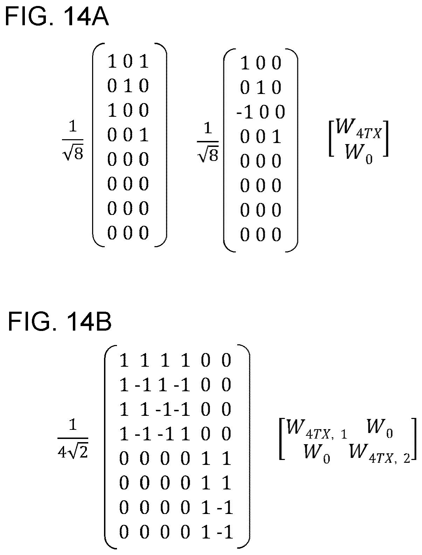

FIG. 14A is a diagram to show an example of a new precoder of three layers obtained by re-using an existing 4-port partial-coherent precoder. In FIG. 14A, for example, an existing 3-layer precoder shown in FIG. 3 is reused.

FIG. 14B is a diagram to show an example of a 6-layer precoder with four layers from one coherent group and two layers from another coherent group. In FIG. 14B, for example, an existing 2-layer precoder and an existing 4-layer precoder shown in FIGS. 2 and 4 are reused.

In a case of a UE having four coherent groups, a new 8-port precoder may be formed by re-using an existing precoder $W_{2TX}$ of 1, 2, 3, or 4. For example, a UE having four coherent groups, with two ports per group, may perform 8-port transmission taking account of one TPMI indication per 2TX on the basis of four TPMI indices notified.

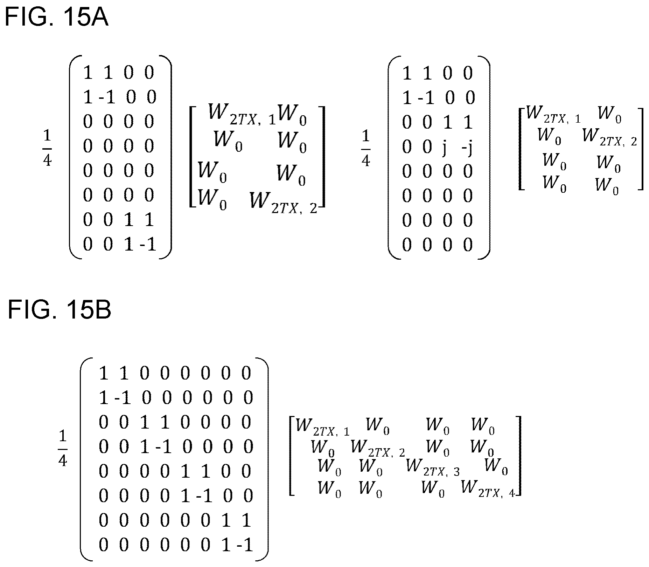

FIG. 15A is a diagram to show an example of a 4-layer precoder with two layers from one coherent group and two layers from another coherent group. In FIG. 15A, for example, an existing 2-layer precoder shown in FIG. 5B is reused.

FIG. 15B is a diagram to show an example of an 8-layer precoder with four 2-layer precoders from four coherent groups. In FIG. 15B, for example, an existing 2-layer precoder shown in FIG. 5B is reused.

(Restriction for Precoding Matrix)

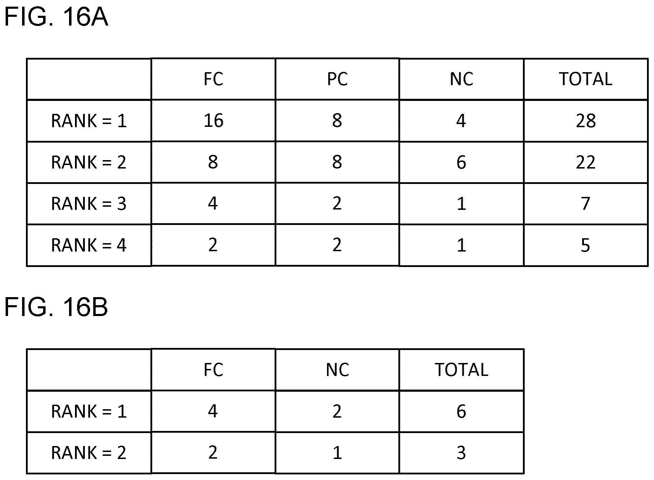

FIG. 16A is a diagram to show the numbers of existing 4-port precoders shown in FIGS. 1 to 4. FIG. 16A shows that, for example, regarding existing 4-port FC precoders, sixteen for rank 1, eight for rank 2, four for rank 3, and two for rank 4 are prescribed.

FIG. 16B is a diagram to show the numbers of existing 2-port precoders shown in FIGS. 5A and 5B. FIG. 16B shows that, for example, regarding existing 2-port FC precoders, four for rank 1 and two for rank 2 are prescribed.

In a case where all the 4-port/2-port precoders are used (as selection candidates) for generation of 8-port PC precoders, the number of 8-port PC precoders may be made enormous, causing an increase in overhead needed for notification of TPMI indices corresponding to precoders used.

Thus, it is under study to suppress the number of available 8-port precoders to appropriately perform UL transmission using more than four antenna ports.

For example, a restriction related to A, $A_1$, $A_2$, $A_3$, $A_4$, and the like included in precoders for an 8TX UE in $N_g$ = 2, 4 may be applied based on a certain regulation. The certain regulation may be, for example, at least one of the following:

- a precoder allowed is an FC precoder only or a PC precoder only

- a precoder allowed is a precoder based on a certain rule only
- for a certain rank, only part of existing precoders is allowed
- a precoder applicable is selected depending on a combination of ranks allowed for a plurality of antenna groups
- a precoder applicable is selected depending on a pair of antenna groups allowed
- a precoder applicable is selected depending on a pair of $A_1$ to $A_4$ allowed

The restriction may be a restriction that, in a case of using a specific precoder (type-2 precoder), $A_1$ and $A_2$ are the same precoder under a specific condition. The specific condition may be, for example, a condition that the rank of $A_1$ is the same as the rank of $A_2$.

Note that, in the present disclosure, a restriction for a precoding matrix and selection of a precoder may be interchangeably interpreted. In the present disclosure, for generation of 8-port PC precoders, part of existing precoders is selected. In the present disclosure, such "select" may mean being prescribed in a standard in advance, may mean being configured by higher layer signaling, or may mean being reported (or determined) with UE capability information. The "select" may be made per rank/coherent type/the number of TXs or may be made across a plurality of ranks/coherent types/the numbers of TXs. Note that, by higher layer signaling, a set of precoders specifiable by physical layer signaling (for example, DCI) may be identified. These are similarly applied to other embodiments.

(SRS Configuration and TPMI Indication for Codebook Based PUSCH in 8TX)

In a case of supporting UL (PUSCH) transmission with up to eight layers and having 8TX (eight antenna ports), a UE may receive DCI (for example, DCI format 0_1/0_2) including a plurality of fields of at least one of a precoding-information-and-number-of-layers (Precoding information and number of layers) field and an extended TPMI field, for codebook based PUSCH transmission. The UE may control UL transmission using 8TX, based on the DCI.

The plurality of precoding-information-and-number-of-layers fields, the plurality of TPMI fields, or both may correspond, in one-by-one basis, to a plurality of coherent groups that the terminal has.

For a UE with two coherent groups each having four ports, by using two fields of extended TPMI, TPMIs per coherent group or the rank of a scheduled PUSCH may be indicated. For the indicated TPMIs or rank, an existing 4TX UL codebook and a TPMI index table are reused.

For a UE with four coherent groups each having two ports, by using four fields of extended TPMI, TPMIs per coherent group or the rank of a scheduled PUSCH may be indicated. For the indicated TPMIs or rank, an existing 2TX UL codebook and a TPMI index table are reused.

In a case of a UE with two coherent groups, when two "SRS resource indication" fields are enabled, the following options are conceivable.

<<Option 1>>

For two fields of "extended TPMI," a table of an existing "precoding-information-and-number-of-layers" field with respect to four antenna ports can be reused (FIG. 6). In other words, a UE may judge indication of a TPMI field by using a table the same as a table for the precoding-information-and-number-of-layers field. Accordingly, one field indicates both a layer and a TPMI index, for a coherent group/SRS resource in a corresponding SRS resource set.

<<Option 1a>>

For fields of "extended TPMI," an existing "precoding-information-and-number-of-layers" table for four antenna ports may be reused. For example, with respect to a first coherent group, a first field = 11 of "extended TPMI" indicates "4 layers, TPMI = 0 ($W_{4TX, 4, 0}$)." With respect to a second coherent group, a second field = 4 of "extended TPMI" indicates "2 layers, TPMI = 0 ($W_{4TX, 2, 0}$)." $W_{4TX, i, j}$ may mean a 4TX precoder of a TPMI table for i-layer transmission with TPMI index j.

<<Option 1b>>

One field of "extended TPMI" can indicate an entry of "four layers" only. This allows the bit size of this field to be reduced widely, and is equal to indication of one TPMI index from a 4-layer TPMI table. For the other one field of "extended TPMI," an existing "precoding-information-and-number-of-layers" table for four antenna ports may be reused. With this, only one precoder from all $W_{4TX, 4, j}$ is indicated, allowing overhead to be reduced.

<<Option 1c>>

For one field (first field) of "extended TPMI," an existing "precoding-information-and-number-of-layers" table with respect to four antenna ports can be reused. For the other one field, the "precoding-information-and-number-of-layers" table can be interpreted, based on indication of the first field. For example, when one "extended TPMI" field = 9 and TPMI = 5 for two layers, the other one field can make indication only from entries of one layer and two layers. In a case where there is any restriction and relation between $W_{4TX, i, j}$ and $W_{4TX, m, n}$, $m \le i$.

Note that, in each option, a scaling factor of an 8TX precoder newly coupled may be re-calculated.

<<Option 2>>

For two fields of "extended TPMI," an existing TPMI index table for four antenna ports can be reused (FIGS. 1 to 4). Layer information may be indicated separately by two fields of layer indication, for example.

<<Option 2a>>

Similarly to Option 1a, two fields of "extended TPMI" and two fields of "layer indication" have no limitation or relation therebetween.

<<Option 2b>>

Similarly to Option 1b, one field of "layer indication" indicates four layers only and one field of "extended TPMI" indicates a 4-layer precoder only.

<<Option 2c>>

Similarly to Option 1c, one field of "layer indication" is smaller than any other field.

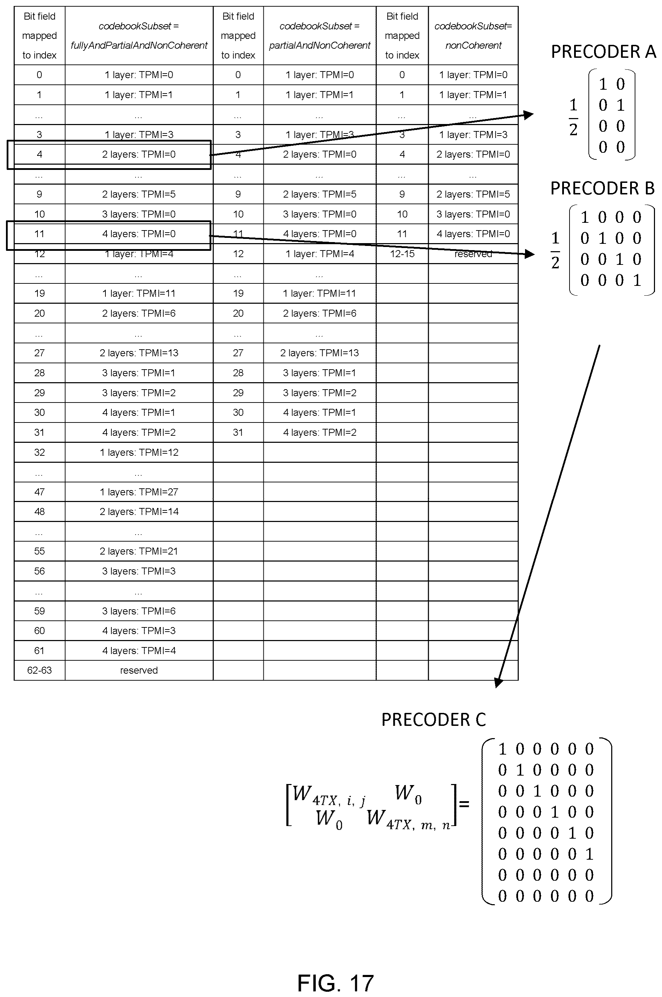

FIG. 17 is a diagram to show an example of a correspondence relation between a precoding-information-and-number-of-layers field value and the number of layers and a TPMI. In other words, FIG. 17 shows an example that the table in FIG. 6 is reused for "extended TPMI."

In a case where the second field of "extended TPMI" is 4, with respect to the second SRS resource set/UE coherent group, two layers may be indicated and precoder A of FIG. 17 may be indicated.

In a case where the first field of "extended TPMI" is 11, with respect to the first SRS resource set/UE coherent group, four layers may be indicated and precoder B of FIG. 17 may be indicated.

Thereafter, the above-described two fields are decoded and then the UE may apply precoder C obtained by combining precoders A and B. In this case, a scaling factor is required to be re-calculated.

(Precoder Indication Depending on Number of Antenna Groups (Ng))

As described above, for a partial-coherent precoder according to a codebook for 8-port transmission (8 transmission UL codebook (8TX UL codebook)), the following is under study for each of Ng = 2, 4 cases.

(Case of Ng = 2)

Precoding design may be based on an existing (for example, Rel-15) UL 4TX codebook. A full-coherent precoder/partial-coherent precoder may be used.

(Case of Ng = 4)

Down select for precoders (limitation of the number of precoders) is under study.

<Alt 1>

Precoding design may be based on an existing (for example, Rel-15) UL 2TX codebook. A full-coherent precoder may be used.

<Alt 2>

Precoding design may be based on an existing (for example, Rel-15) UL 4TX codebook. A partial-coherent precoder may be used.

As described above, for a partial-coherent UE, regarding the antenna layout, there are configurations with different numbers of antenna groups (for example, two types, Ng = 2, 4). In this case, it is assumed that a partial-coherent precoder defined with respect to Ng = 2 is different from a partial-coherent precoder defined with respect to Ng = 4.

In such a case, how to deal with configuration of a partial-coherent precoder for each Ng (the number of antenna groups) is not clear. Furthermore, studies have not sufficiently been made on a table to be applied (such as a correspondence relation between a precoding matrix and a TPMI/a correspondence relation between precoding information and the number of layers and a

TPMI).

<Precoder for Ng = 2>

For Ng = 2, an 8-port PC precoder may be configured using one existing 4-port precoder or may be configured using two existing 4-port precoders. The 8-port PC precoder configured using one existing 4-port precoder may be referred to as type-1 precoder. The 8-port PC precoder configured using two existing 4-port precoders may be referred to as type-2 precoder.

Type-1 precoder P may be expressed with Equation 1 below.

[Math. 1]

$$P = \begin{bmatrix} A \\ 0_{4 \times rank(A)} \end{bmatrix}_{8 \times rank(A)} \quad \text{or} \quad P = \begin{bmatrix} 0_{4 \times rank(A)} \\ A \end{bmatrix}_{8 \times rank(A)} \qquad \text{(Equation 1)}$$

Here, A is an existing 4-port precoder and $0_{4 \times rank(A)}$ is a zero matrix of four rows and rank (A) columns. Note that rank (A) means the rank of matrix A (this similarly applies to similar rank (*) below).

Type-2 precoder P may be expressed with Equation 2 below.

[Math. 2]

$$P = \begin{bmatrix} A_1 & O_{4 \times rank(A_2)} \\ 0_{4 \times rank(A_1)} & A_2 \end{bmatrix}_{8 \times (rank(A_1) + rank(A_2))} \qquad \text{(Equation 2)}$$

Here, $A_1$ and $A_2$ are existing 4-port precoders (that may be the same or different precoders).

Type-1 precoder may be used for a case of $1 \leq rank \leq 4$. In other words, rank (A) described above may be rank (A) = 1, 2, 3, or 4. For type-1 precoder, the occupied antenna group, assuming {first antenna group, second antenna group}, may be {10} or {01}. Here, the value '1' may mean being occupied and the value '0' may mean being not occupied. Note that the contents indicated by these values may be opposite.

Type-2 precoder may be used for a case of 1 < rank. In other words, rank (P) may be rank (P) = rank ($A_1$) + rank ($A_2$) = 2, 3, 4, 5, 6, 7, or 8. For type-2 precoder, the occupied antenna group may be {11}.

For type-2 precoder, combinations of (the rank of $A_1$, the rank of $A_2$) may be the following:

- (1, 1) for a case of rank (P) = 2
- (1, 2), (2, 1) for a case of rank (P) = 3
- (1, 3), (2, 2), (3, 1) for a case of rank (P) = 4
- (1, 4), (2, 3), (3, 2), (4, 1) for a case of rank (P) = 5
- (2, 4), (3, 3), (4, 2) for a case of rank (P) = 6
- (3, 4), (4, 3) for a case of rank (P) = 7
- (4, 4) for a case of rank (P) = 8

As described above, full-coherent precoders for a Rel-15 4 transmission UL codebook (4TX UL codebook) corresponding to ranks 1 to 4 may be defined in one table. In the table, for example, indices (TPMI indices) of 0 to 29 may be indicated using a field of 5 bits. In this case, for entries corresponding to indices of 32 to 61, an existing table may be reused.

One codepoint (for example, the index value may be 30) corresponding to rank = 0 (i.e., no precoder) may be introduced. In other words, 30 (types of) precoders may correspond to indices of 0 to 29 and an additional index (30) for indication of rank = 0 may be introduced.

With the entry of rank = 0, a case of layer splitting of (x, 0) and (0, x) can be supported. Layer = 0 may mean that only one antenna group is used, without using a corresponding antenna group, for transmission.

In codebook subset configuration for a partial-coherent precoder in Ng = 2, 5 bits are needed per coherent group. For example, in order to indicate a layer and a TPMI for the first coherent group, first 5 bits (1st 5bit) may be used. In order to indicate a layer and a TPMI for the second coherent group, second 5 bits (2nd 5bit) may be used. These first/second 5-bit fields may indicate entries described above.

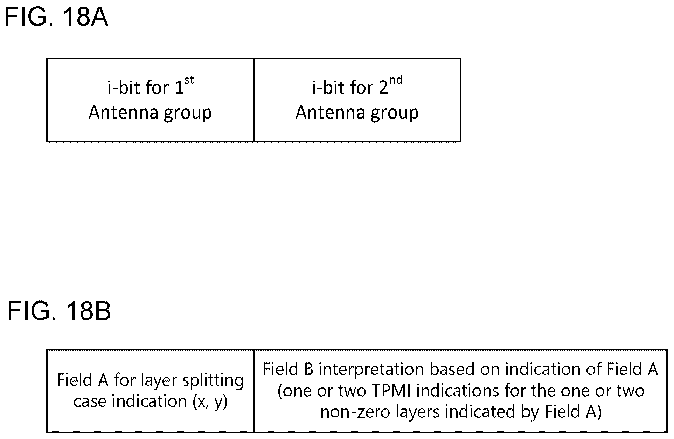

FIG. 18A is a diagram to show an example of a DCI field (first/second field) for precoder indication. In the example described above, although a case is described that the first/second field each has 5 bits, the first/second field may each be expressed with i bits (i may be any natural number) as shown in FIG. 18A. The first field may indicate a first antenna group. The second field may indicate a second antenna group. Between the first and second, i may be the same or different. The order of the first/second may be interchanged.

Combinations supported by the two 5-bit (first/second 5-bit) fields described above may be limited based on the restriction described above.

A new field A with respect to a precoder for an 8TX UE in $N_g$ = 2 may be introduced and a layer splitting case supported in $N_g$ = 2 may be indicated. A new field B may be introduced and a specific precoder may be indicated based on interpretation of the field A. In other words, indication of a layer and a TPMI in the field B may be interpreted based on a layer splitting case indicated in the field A.

FIG. 18B is a diagram to show an example of a DCI field (field A/B) for precoder indication. As shown in FIG. 18B, the field A may indicate a layer splitting case (x, y). Interpretation of the field B may be based on indication of the field A (one or two TPMI indications corresponding to one or two non-zero layers).

<Precoder for Ng = 4>

For Ng = 4, an 8-port PC precoder may be configured using one to four existing 2-port precoders. The 8-port PC precoder configured using i (i = 1 to 4) existing 4-port precoder(s) may be referred to as type-i precoder.

Type-1 precoder P may be expressed with Equation 3 below.

[Math. 3]

$$P = \begin{bmatrix} A \\ 0_{6\times rank(A)} \end{bmatrix}, \ P = \begin{bmatrix} 0_{2\times rank(A)} \\ A \\ 0_{4\times rank(A)} \end{bmatrix}, \ P = \begin{bmatrix} 0_{4\times rank(A)} \\ A \\ 0_{2\times rank(A)} \end{bmatrix}, \ P = \begin{bmatrix} 0_{6\times rank(A)} \\ A \end{bmatrix} \qquad \text{(Equation 3)}$$

Here, A is an existing 2-port precoder and $0_{k\times rank(A)}$ is a zero matrix of k (for example, k = 2, 4, 6) rows and rank (A) columns. Note that type-i precoder in the second embodiment is all a matrix of 8 rows and rank (A) columns (or 8 rows and $\Sigma_i$ rank ($A_i$) columns) and thus "8×rank(A) (or 8 rows and $\Sigma_i$ rank ($A_i$) columns)" on the right bottom of the matrix is omitted. As in Equation 3, Ps listed each separated by a comma may mean that P is expressed by at least one of the described equations (this similarly applies to equations hereinafter).

Type-2 precoder P may be expressed with Equation 4 below.

[Math. 4]

$$P = \begin{bmatrix} A_1 & 0_{2\times rank(A2)} \\ 0_{2\times rank(A1)} & A_2 \\ 0_{2\times rank(A1)} & 0_{2\times rank(A2)} \\ 0_{2\times rank(A1)} & 0_{2\times rank(A2)} \end{bmatrix}, \ P = \begin{bmatrix} A_1 & 0_{2\times rank(A2)} \\ 0_{2\times rank(A1)} & 0_{2\times rank(A2)} \\ 0_{2\times rank(A1)} & A_2 \\ 0_{2\times rank(A1)} & 0_{2\times rank(A2)} \end{bmatrix}, \ ..., \ P = \begin{bmatrix} 0_{2\times rank(A1)} & 0_{2\times rank(A2)} \\ 0_{2\times rank(A1)} & 0_{2\times rank(A2)} \\ A_1 & 0_{2\times rank(A2)} \\ 0_{2\times rank(A1)} & A_2 \end{bmatrix}$$

$$\text{(Equation 4)}$$

Here, $A_1$ and $A_2$ are existing 4-port precoders (that may be the same or different precoders).

Type-3 precoder P may be expressed with Equation 5 below.

[Math. 5]

$$P = \begin{bmatrix} A_1 & 0_{2\times rank(A2)} & 0_{2\times rank(A3)} \\ 0_{2\times rank(A1)} & A_2 & 0_{2\times rank(A3)} \\ 0_{2\times rank(A1)} & 0_{2\times rank(A2)} & A_3 \\ 0_{2\times rank(A1)} & 0_{2\times rank(A2)} & 0_{2\times rank(A3)} \end{bmatrix}, \ P = \begin{bmatrix} A_1 & 0_{2\times rank(A2)} & 0_{2\times rank(A3)} \\ 0_{2\times rank(A1)} & A_2 & 0_{2\times rank(A3)} \\ 0_{2\times rank(A1)} & 0_{2\times rank(A2)} & 0_{2\times rank(A3)} \\ 0_{2\times rank(A1)} & 0_{2\times rank(A2)} & A_3 \end{bmatrix},$$

$$P = \begin{bmatrix} A_1 & 0_{2\times rank(A2)} & 0_{2\times rank(A3)} \\ 0_{2\times rank(A1)} & 0_{2\times rank(A2)} & 0_{2\times rank(A3)} \\ 0_{2\times rank(A1)} & A_2 & 0_{2\times rank(A3)} \\ 0_{2\times rank(A1)} & 0_{2\times rank(A2)} & A_3 \end{bmatrix}, \ P = \begin{bmatrix} 0_{2\times rank(A1)} & 0_{2\times rank(A2)} & 0_{2\times rank(A3)} \\ A_1 & 0_{2\times rank(A2)} & 0_{2\times rank(A3)} \\ 0_{2\times rank(A1)} & A_2 & 0_{2\times rank(A3)} \\ 0_{2\times rank(A1)} & 0_{2\times rank(A2)} & A_3 \end{bmatrix} \qquad \text{(Equation 5)}$$

Here, $A_1$, $A_2$, and $A_3$ are existing 4-port precoders (that may be the same or different precoders).

Type-4 precoder P may be expressed with Equation 6 below.

[Math. 6]

$$P = \begin{bmatrix} A_1 & 0_{2\times rank(A2)} & 0_{2\times rank(A3)} & 0_{2\times rank(A4)} \\ 0_{2\times rank(A1)} & A_2 & 0_{2\times rank(A3)} & 0_{2\times rank(A4)} \\ 0_{2\times rank(A1)} & 0_{2\times rank(A2)} & A_3 & 0_{2\times rank(A4)} \\ 0_{2\times rank(A1)} & 0_{2\times rank(A2)} & 0_{2\times rank(A3)} & A_4 \end{bmatrix} \quad \text{(Equation 6)}$$

Here, $A_1$, $A_2$, $A_3$, and $A_4$ are existing 4-port precoders (that may be the same or different precoders).

Type-1 precoder may be used for a case of $1 \leq rank \leq 2$. In other words, rank (A) described above may be rank (A) = 1 or 2. For type-1 precoder, the occupied antenna group, assuming {first antenna group, second antenna group, third antenna group, fourth antenna group}, may be {1000}, {0100}, {0010}, or {0001} (which correspond to the respective ones of P in order from left in Equation 3). Here, the value '1' may mean being occupied and the value '0' may mean being not occupied. Note that the contents indicated by these values may be opposite.

Type-2 precoder may be used for a case of $2 \leq rank \leq 4$. In other words, rank (P) may be rank (P) = rank ($A_1$) + rank ($A_2$) = 2, 3, or 4. For type-2 precoder, the occupied antenna group may be {1100}, {1010}, {1001}, {0110}, {0101}, or {0011} (which correspond to the respective Ps in order from left in Equation 4).

For type-2 precoder, combinations of (the rank of $A_1$, the rank of $A_2$) may be the following:

- (1, 1) for a case of rank (P) = 2
- (2, 1), (1, 2) for a case of rank (P) = 3
- (2, 2) for a case of rank (P) = 4

Type-3 precoder may be used for a case of $3 \leq rank \leq 6$. In other words, rank (P) may be rank (P) = rank ($A_1$) + rank ($A_2$) = 3, 4, 5, or 6. For type-3 precoder, the occupied antenna group may be {1110}, {1101}, {1011}, or {0111} (which correspond to the respective Ps in order from left in Equation 5).

For type-3 precoder, combinations of (the rank of $A_1$, the rank of $A_2$, the rank of $A_3$) may be the following:

- (1, 1, 1) for a case of rank (P) = 3
- (2, 1, 1), (1, 2, 1), (1, 1, 2) for a case of rank (P) = 4
- (2, 2, 1), (2, 1, 2), (1, 2, 2) for a case of rank (P) = 5
- (2, 2, 2) for a case of rank (P) = 6

Type-4 precoder may be used for a case of $4 \leq rank \leq 8$. In other words, rank (P) may be rank (P) = rank ($A_1$) + rank ($A_2$) = 4, 5, 6, 7, or 8. For type-4 precoder, the occupied antenna group may be {1111} (which corresponds to P in Equation 6).

For type-4 precoder, combinations of (the rank of $A_1$, the rank of $A_2$, the rank of $A_3$, the rank of $A_4$) may be the following:

- (1, 1, 1, 1) for a case of rank (P) = 4
- (2, 1, 1, 1), (1, 2, 1, 1), (1, 1, 2, 1), (1, 1, 1, 2) for a case of rank (P) = 5
- (2, 2, 1, 1), (2, 1, 2, 1), (2, 1, 1, 2), (1, 2, 2, 1), (1, 1, 2, 2), (1, 2, 1, 2) for a case of rank (P) = 6
- (2, 2, 2, 1), (2, 2, 1, 2), (2, 1, 2, 2), (1, 2, 2, 2) for a case of rank (P) = 7
- (2, 2, 2, 2) for a case of rank (P) = 8

(UL Transmission with More Than 4 Ranks/Plurality of Codewords)

For UL transmission, in a case where the maximum number of ranks (for example, max configured PUSCH rank) configured by RRC takes a value greater than 4 (for example, 8), UL transmission control as below may be applied.

The maximum number of ranks (for example, maximum configured PUSCH rank) for UL transmission (for example, PUSCH) is not limited to the case of being configured by RRC, and may take a value reported as UE capability.

In the following, although description is made taking a case as an example that the maximum configured PUSCH rank (for example, max configured PUSCH rank) is 8, the maximum configured PUSCH rank may take another value (for example, 5, 6, or 7).

In a case where the maximum number of ranks configured for UL transmission is greater than 4, a rank range indicated by DCI may be determined based on the maximum number of ranks. For example, the rank range indicated by the DCI (for example, DCI indicated rank range) may be determined, based on at least one of Option 1 to Option 2 below.

<Option 1>

In a case where the maximum number of ranks configured for UL transmission is greater than 4, a rank range indicated by DCI may be a range of 1 or more and up to the maximum number of ranks (for example, 1 to 8).

Regarding a field of DCI applied to rank indication, a certain field may be applied. For example, in a case where codebook based transmission (for example, CB-based TX) is applied, a rank/rank range may be indicated by a precoding-information-and-number-of-layers indication field (for example, Precoding information and number of layers field) included in the DCI.

In a case where non-codebook based transmission (for example, non-CB-based TX) is applied, a rank/rank range may be indicated by an SRS resource indicator field (for example, SRI field) included in the DCI.

Supporting indication of four or less ranks/layers in a case where the maximum number of ranks configured for UL transmission is more than 4 enables the number of ranks/layers to be applied to be flexibly controlled irrespective of the maximum number of ranks for UL transmission.

<Option 2>

In a case where the maximum number of ranks configured for UL transmission is greater than 4, a rank range indicated by DCI may be a sub-range from 1 or more and up to the maximum number of ranks (for example, 1 to 8). The sub-range may be, for example, a first range (for example, 1 to 4) or second range (for example, 5 to 8). The sub-range may be configured/indicated by RRC/MAC CE/DCI.

A case where a sub-range is configured/indicated by RRC/MAC CE may mean that a rank range indicated by DCI is configured/indicated by the RRC/MAC CE.

In a case where a sub-range is indicated by DCI, the sub-range may be indicated explicitly (for example, by explicit bit indication) or may be indicated implicitly.

In a case of explicit indication by DCI, a sub-range may be indicated or, from among sub-range candidates defined in advance, a specific sub-range may be indicated.

In a case of implicit indication by DCI, an existing field of the DCI may be applied. For example, based on a value of a certain field corresponding to a certain transport block, a sub-range may be indicated. The certain field may be, for example, at least one of an MCS field, an NDI field, and an RV field. A case where the certain field has a specific value may mean that a specific sub-range is indicated.

UE capability related to whether to support configuration/indication between different ranks/sub-ranges may be defined.

(Analysis)

<Analysis 1>

As described above, for UL transmission using 8TX, it is under study to support a configuration for up to four layers or up to eight layers, depending on UE capability. In this case, for eight antenna ports, with respect to the two configurations (configuration for up to four layer or up to eight layers), whether the same table or different tables are applied for TPMI indication is not clear. In addition, whether common (same) or separate (different) rank and TPMI indications in DCI are used, or whether indication by DCI is applied or not is not clear.

<Analysis 2>

For UL transmission using 8TX, in a case where up to eight layers are configured, if a sub-range of ranks 1 to 4 and a sub-range of ranks 5 to 8 are possible to be explicitly/implicitly indicated by an NW, a method of DCI indication for a rank and a TPMI may differ between the sub-range (ranks 1 to 4/ranks 5 to 8) and full-range (ranks 1 to 8). Here, DCI indication for sub-range may mean that indication is made separately (per sub-range) for ranks 1 to 4/ranks 5 to 8. DCI indication for range may mean that indication is made directly (in common) for ranks 1 to 8.

As described in Analysis 1/2, unless prescription related to rank and TPMI indication using DCI is clear, individual preferable configurations for the precoding matrix may be inhibited or an increase in bit size of the downlink control information may be caused, causing an increase in communication throughput to be suppressed.

In view of this, the inventors of the present invention came up with the idea of a preferable method of DCI indication for a rank and a TPMI.

Embodiments according to the present disclosure will be described in detail with reference to the drawings as follows. The radio communication methods according to respective embodiments may each be employed individually, or may be employed in combination.

(Various Kinds of Interpretations etc.)

In the present disclosure, "A/B" and "at least one of A and B" may be interchangeably interpreted. In the present disclosure, "A/B/C" may mean "at least one of A, B, and C."

In the present disclosure, notify, activate, deactivate, indicate (or specify), select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a TPMI and a TPMI index may be interchangeably interpreted. A port and an antenna port may be interchangeably interpreted. 8TX (8 transmission) may mean eight ports or eight antenna ports. A port/antenna port may mean a port/antenna port for UL (for example, SRS/PUSCH) transmission. In the present disclosure, an SRS resource set and a resource set may be interchangeably interpreted. A coherent group and an SRS resource set may be interchangeably interpreted.

In the present disclosure, although 8TX is mainly described, the description may also be applied to 5TX, 6TX, 7TX, TX of more than 8, TX of 4 or less, and the like, similarly to the case of 8TX. "8" in the following embodiments may be interpreted as "n (n is any integer)". For this, the number of layers/the number of ports and the like described assuming the maximum value being "8" may be appropriately interpreted assuming the maximum value being "n" by those skilled in the art.

Note that, in the present disclosure, "having capability of ..." and "supporting/reporting capability of ..." may be interchangeably interpreted.

In the present disclosure, a rank, a transmission rank, the number of layers, and the number of antenna ports may be interchangeably interpreted. A case that one codeword is applied and a case that the number of layers is 4 layers or smaller may be interchangeably interpreted. A case that two codewords are applied and a case that the number of layers is greater than 4 layers may be interchangeably interpreted.

In the present disclosure, a table and one or a plurality of tables may be interchangeably interpreted.

DCI in the following embodiments may mean DCI (for example, DCI format 0_x, 1_x (here, x is an integer)) that schedules at least one of a PUSCH and a PDSCH. Although the following embodiments are premised on codebook based transmission (PUSCH), the embodiments are not limited to this.

Although the following embodiments are premised on codebook based PUSCH transmission, the embodiments are not limited to this.

In the present disclosure, an x-port precoder (x is an integer) may mean an x-port PC/FC/NC precoder. An x-port precoder may mean an x-port i-layer PC/FC/NC precoder (i is an integer) (or a rank-i-x-port PC/FC/NC precoder).

In the present disclosure, an existing x-port precoder may be an x-port precoder (for example, a precoder included in a codebook for 4-port transmission in UL) defined for 3GPP Rel-15 NR, for example.

In the present disclosure, field A/field B and a first field/second field may be interchangeably interpreted.

(Radio Communication Method)

<First Embodiment>

A first embodiment corresponds to Analysis 1 described above, and relates to DCI indication for a rank and a TPMI depending on the number of layers.

In configuration of a certain coherent type/configuration of a certain codebook subset restriction, a precoding matrix table/a table indicating ranks and TPMIs/a DCI indication method may be the same for two configurations (configuration for up to four layers or up to eight layers). In other words, common indication may be made for a precoder for configuration of up to four layers and a precoder for configuration of up to eight layers.

Possible, i.e., indicatable in common, coherent type configurations may include non-coherent, partial coherent for Ng = 2, partial coherent for Ng = 4, full coherent for (N1, N2) = (4, 1), and full coherent for (N1, N2) = (2, 2).

Alternatively, full coherent for (N1, N2) = (2, 2) with (O1, O2) = (1, 1) or (O1, O2) = (2, 1) or (O1, O2) = (2, 2) may be included.

Alternatively, full coherent for (N1, N2) = (4, 1) and (O1, O2) = (1, 1) with codebook mode 1 or codebook mode 2 may be included.

Here, (N1, N2) may denote the number of antenna elements (the number of ports) in two dimensions, and (O1, O2) may denote an oversampling coefficient (factor) in two dimensions.

{Option 1}

A DCI indication field and the bit size of each field may be the same (common) for the two configurations (configuration for up to four layers or up to eight layers) described above. The bit size may be determined based on the maximum number of indications (max number of indications), from a range of ranks 1 to 8.

In Option 1, the two configurations may be different from each other mainly in valid value range of the DCI indication field or valid combinations of a plurality of fields in the DCI.

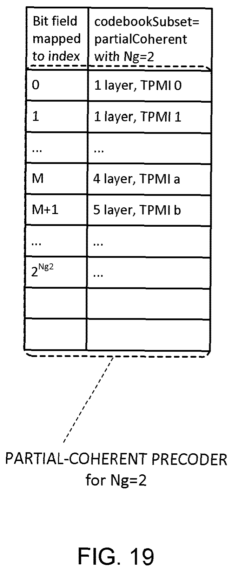

FIG. 19 is a diagram to show an example of a correspondence relation between a value of a field of precoding information (for example, precoder type/coherent type) and the number of layers and the number of layers and a TPMI according to the first embodiment.

In FIG. 19, an example of configuration of a certain coherent type (partial-coherent precoder with Ng = 2) is shown where joint indication for a rank and a TPMI is made. In the table of FIG. 19, indication of the number of layers corresponding to a field value (bit field) and a corresponding TPMI index are identified.

A partial-coherent precoder for Ng = 2 can be indicated with a field value = 0 to $2^{Ng2}$. For example, in a case of a field value = 0, a precoder of 1 layer and TPMI 0 is indicated. In a case of a field value = M, a precoder of 4 layer and TPMI a may be indicated. In a case of a field value = M + 1, a precoder of 5 layer and TPMI b may be indicated.

In the example of FIG. 19, the number of bits for the two configurations may be the same, Ng2 bits (Ng2 is an integer). Note that the valid value range with respect to the configuration for up to four layers may be smaller (for example, 0 to M). In other words, field values = 0 to M may correspond to the configuration for up to four layers and field values = M + 1 to $2^{Ng2}$ may correspond to the configuration for up to eight layers

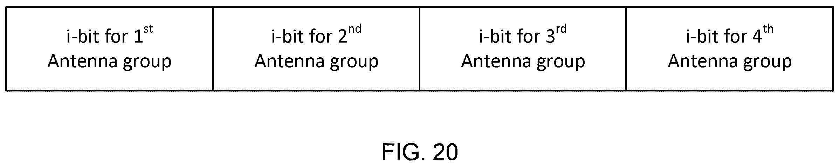

FIG. 20 is a diagram to show an example of a DCI field for precoder indication according to the first embodiment. FIG. 20 shows an example that a partial-coherent precoder for Ng = 4 is indicated with a plurality of fields.

For example, in order to indicate a layer and a TPMI for the first coherent group (antenna group), a first field of i bits may be used. In order to indicate a layer and a TPMI for the second coherent group, a second field of i bits may be used. In order to indicate a layer and a TPMI for the third coherent group, a third field of i bits may be used. In order to indicate a layer and a TPMI for the fourth coherent group, a fourth field of i bits may be used. For the two configurations, the bit size of each field may be the same. In other words, for the first to fourth fields, i may be the same number. The order of the first to fourth field may be interchanged.

{Option 2}

A DCI indication field may be the same (common) for the two configurations (configuration for up to four layers or up to eight layers) described above. Meanwhile, the bit size of each field may differ between the two configurations described above.

<Option 2-1>

In a case where joint indication for a rank and a TPMI is made, for the configuration for up to four layers, the bit size of a field (joint field) for such joint indication can be small.

<Option 2-2>

In a case where there are a plurality of fields for layers/TPMIs, for the configuration for up to four layers, the bit size of a specific (certain) field can be small.

For example, in a case where a Rank Indicator (RI) and a TPMI are separately indicated, for the configuration for up to four layers, the bit size of an RI field can be small. More specifically, an RI field for up to eight layers may have 3 bits and a TPMI field for up to four layers may have 2 bits.

For example, in a method of indicating the field A and field B described above, the field A indicating a layer splitting case may have, for the configuration for up to four layers, a small bit size. Meanwhile, the bit size of the field B may be the same for the two configurations.

For example, in FIG. 19, the bit size for the configuration for up to eight layers may be Ng2 bits (field value = M + 1 to $2^{Ng2}$). In this case, the bit size for the configuration for up to four layers may be smaller than this (than Ng2 bits), for example, smaller than $\log2(M + 1)$ bits (field value = 0 to M).

In this case, $\log2(M + 1)$ may be $\log2(M + 1) = Ng2$. A reason for this is because a precoder number/index for ranks 1 to 4 is larger than a precoder number/index for ranks 5 to 8.

Note that M described above may be defined in a specification or may be configured/indicated by using higher layer signaling/physical layer signaling. The size of the DCI indication field may be configured/indicated by using higher layer signaling/physical layer signaling.

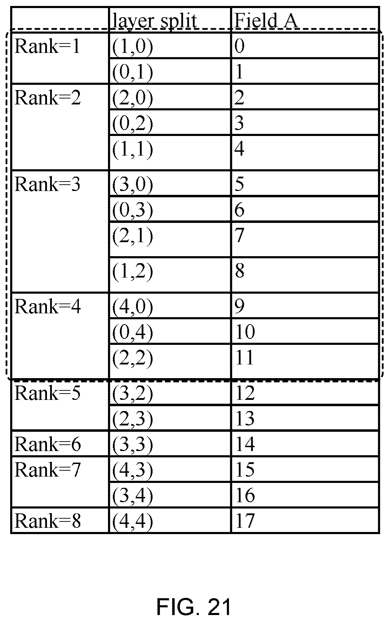

FIG. 21 is a diagram to show an example of a correspondence relation between a rank and a layer splitting case and a field A according to the first embodiment. In FIG. 21, the size of the field A (ranks 1 to 4) for the configuration for up to four layers may be 4 bits and the size of the field A (ranks 5 to 8) for the configuration for up to eight layers may be 5 bits.

{Variations}

In configuration of different coherent types/configuration of different codebook subset restrictions, a common/-joint DCI indication method may be supported for an RI and a TPMI.

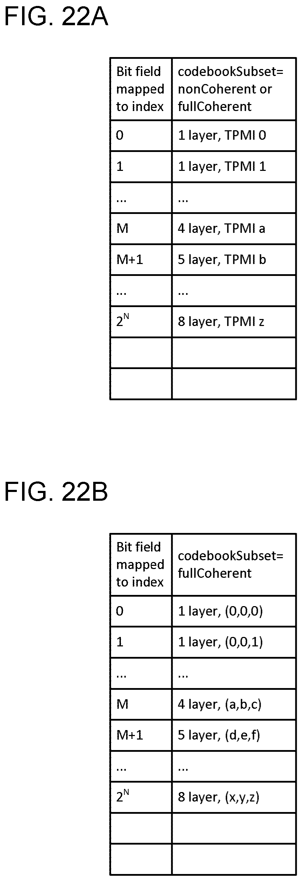

FIGS. 22A and 22B are each a diagram to show another example of the correspondence relation between a precoding-information-and-number-of-layers field value and the number of layers and a TPMI according to the first embodiment. FIG. 22A shows an example that common indication is made for non-coherent and full coherent. FIG. 22B shows an example of a common indication set for full coherent. For example, for a case of non-coherent/full coherent (a case of different N1, N2, O1, O2, and mode), in order to make joint indication for an RI and a TPMI, one field may be supported (FIG. 22A).

For a case of full coherent (a case of different N1, N2, O1, O2, and mode), one field may be supported with respect to a joint indication set for an RI and a TPMI (for example, a combination set ($i_{1,1}$, $i_{1,2}$, $i_2$) of a Rel-15 DL type 1 codebook) (FIG. 22B).

In FIG. 22A, a non-/full-coherent precoder can be indicated with a field value = 0 to $2^N$. For example, in a case of a field value = M, a precoder of 4 layer and TPMI a may be indicated. For example, in a case of a field value = $2^N$, a precoder of 8 layer and TPMI z may be indicated.

In FIG. 22B, a full-coherent precoder can be indicated with a field value = 0 to $2^N$. For example, in a case of a field value = M, a precoder corresponding to 4 layer and combination set (a, b, c) may be indicated. In a case of a field value = $2^N$, a precoder corresponding to 8 layer and combination set (x, y, z) may be indicated.

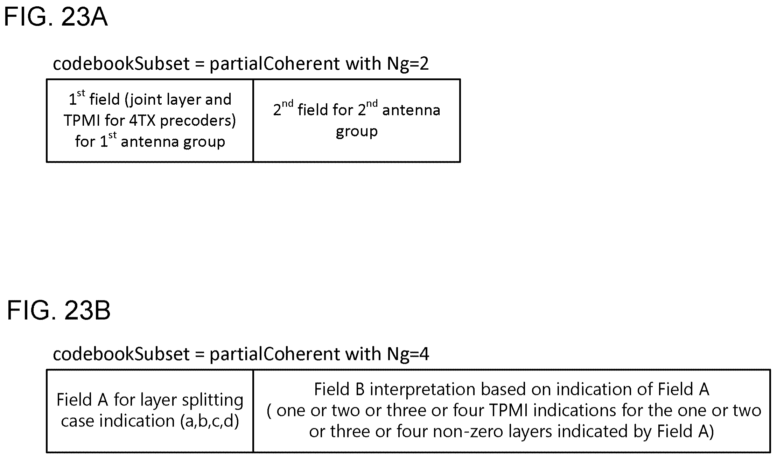

FIGS. 23A and 23B are each a diagram to show another example of the DCI field for precoder indication according to the first embodiment. For partial coherent with Ng = 2 (FIG. 23A)/partial coherent with Ng = 4 (FIG. 23B), a plurality of fields may be supported for indication of RIs and TPMIs.

FIG. 23A is a diagram to show an example of a first/second field. The first field may indicate a first antenna group (for example, jointly indicate a layer and a TPMI for 4TX/2TX precoders). The second field may indicate a second antenna group.

FIG. 23B is a diagram to show an example of a field A/B. The field A may indicate a layer splitting case (a, b, c, d). Interpretation of the field B may be based on indication of the field A (one to four TPMI indications corresponding to one to four non-zero layers).

In other words, in DCI indication in FIG. 23B, field A + field B may be used. The field A may indicate a layer splitting case between Ng antenna groups as described above. The field B may indicate up to Ng precoders with respect to an antenna group with a layer value being not 0.

The first embodiment described above enables one rank out of ranks 1 to 8 to be indicated by using one indicator in DCI, for example. Hence, indication of a rank and a TPMI with use of DCI can be appropriately controlled.

<Second Embodiment>

A second embodiment corresponds to Analysis 2 described above, and relates to DCI indication, per sub-range (rank range), for a rank and a TPMI.

{Option 1}

In a case of joint indication for a rank and a TPMI, in configuration of a certain coherent type/configuration of a certain codebook subset restriction, it is possible to indicate a rank and a TPMI by using the same codepoint for both a sub-range of ranks 1 to 4 and a sub range of ranks 5 to 8. In this case, which sub-range to apply may follow the rule described above. In other words, the sub-range may be explicitly/implicitly indicated.

A DCI indication field and the bit size of each field may be the same for the two configurations (configuration for up to four layers or up to eight layers). The bit size may be determined based on the maximum number of indications (max number of indications), from a range (sub-range) of ranks 1 to 4/ranks 5 to 8. Note that, typically, a precoder number/index for ranks 1 to 4 is larger than a precoder number/index for ranks 5 to 8, and thus the bit size may be determined based on the maximum number of indications, from the sub-range of ranks 1 to 4.

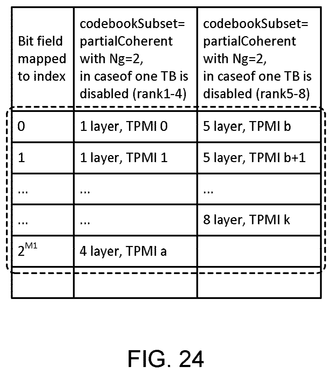

FIG. 24 is a diagram to show an example of a correspondence relation between a precoding-information-and-number-of-layers field value and the number of layers and a TPMI according to the second embodiment. In FIG. 24, with respect to a certain field value (bit field), the number of layer and a TPMI corresponding to ranks 1 to 4 are associated with the number of layer and a TPMI corresponding to ranks 5 to 8. A case that ranks 1 to 4 are applied may be a case that one transport block (TB) is disabled. A case that ranks 5 to 8 are applied may be a case that two transport blocks are scheduled.

In FIG. 24, a partial-coherent precoder for $Ng = 2$ can be indicated with a field value = 0 to $2^{M1}$. For example, in a case of a field value = 0, a partial-coherent precoder of 1 layer and TPMI 0 may be indicated for ranks 1 to 4 and a partial-coherent precoder of 5 layer and TPMI b may be indicated for ranks 5 to 8.

Note that, in a case of full-coherent codebook subset configuration with a pair of (N1, N2), each TPMI index a corresponding to rank j may be, based on a regulation defined in advance, associated with a combination set $(i_{1,1}, i_{1,2}, i_2)$ corresponding to rank j of a Rel-15 DL type 1 codebook, for example.

{Option 2}

In a case of DCI indication using field A + field B described above, in configuration of a certain coherent type/configuration of a certain codebook subset restriction, it is possible to indicate a layer splitting case by using the same codepoint for both the sub-range of ranks 1 to 4 and the sub range of ranks 5 to 8. In this case, which sub-range to apply may follow the rule described above. In other words, the sub-range may be explicitly/implicitly indicated.

A DCI indication field and the bit size of each field may be the same for the two configurations (configuration for up to four layers or up to eight layers). The bit size may be determined based on the maximum number of indications (max number of indications), from a range (sub-range) of ranks 1 to 4/ranks 5 to 8. Note that, typically, the number of layer splitting cases for ranks 1 to 4 is greater than the number of layer splitting cases for ranks 5 to 8, and thus the bit size may be determined based on the maximum number of indications, from the sub-range of ranks 1 to 4.

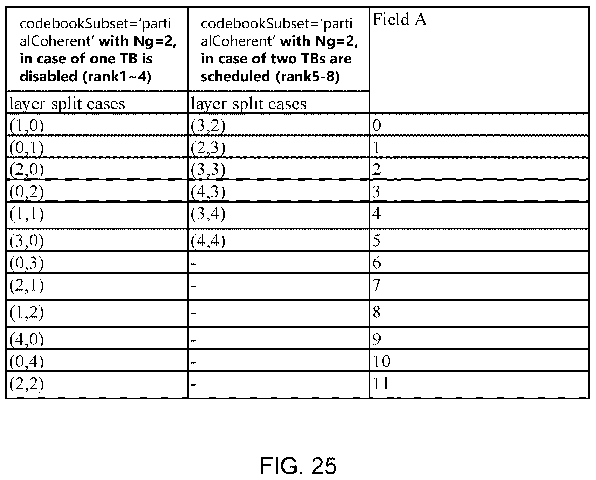

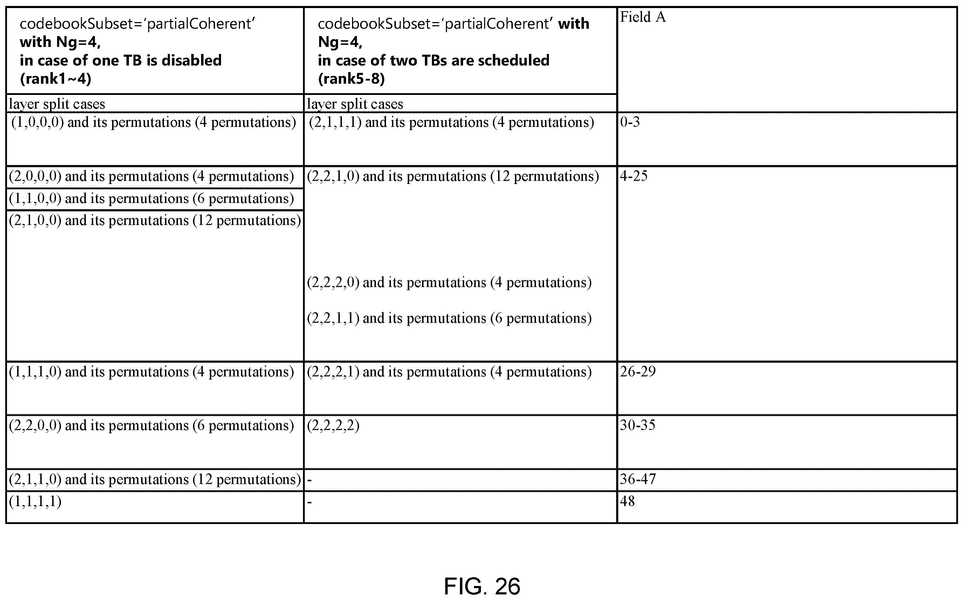

FIGS. 25 and 26 are each a diagram to show an example of a correspondence relation between a rank and a layer splitting case and a field A according to the second embodiment. FIG. 25 corresponds to partial coherent with $Ng = 2$, and FIG. 26 corresponds to partial coherent with $Ng = 4$. In both of FIGS. 25 and 26, with respect to a certain field A value, a layer splitting case corresponding to ranks 1 to 4 may be associated with a layer splitting case corresponding to ranks 5 to 8.

{Variations}

As described above, the sub-range (ranks 1 to 4/ranks 5 to 8) may be explicitly/implicitly indicated. In this case, for a UE, dynamic DCI indication between sub-ranges of ranks 1 to 4 may be applied (opt 1). For the UE, dynamic DCI indication between ranges of ranks 1 to 8 (full range) may be applied (opt 2). Furthermore, for the UE, dynamic DCI indication between sub-ranges of ranks 5 to 8 may be applied (opt 3).

For example, by using higher layer signaling, in a case where it is configured that dynamic indication between rank x1 to rank x2 is allowed for a UE ((x1, x2) = (5, 8)), the bit size of a DCI indication field may be determined based on a value of (x1, x2).

As a specific example of opt 2, two sub-ranges of ranks 1 to 4 and ranks 5 to 8 may be implicitly indicated by DCI, and then, in the same DCI, a specific rank in a certain sub-range may be indicated by a different indicator.

The second embodiment described above enables indication of a rank and a TPMI with use of DCI to be appropriately controlled.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information for at least one of the above-described embodiments
- supporting of 8TX UL transmission
- supporting of a plurality of different antenna layouts/the numbers of antenna groups
- precoder type to support (for example, type 1/2, type A/B/C/D)
- existing x-port PC/FC/NC precoder (to support) available for configuration of 8-port PC precoders
- supporting of limitation of a precoder
- supporting of joint indication of a precoder
- supporting of precoder indication per sub-range

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that supporting of 8TX UL transmission and supporting of a plurality of different antenna layouts/the numbers of antenna groups are enabled, any RRC parameter for a specific release (for example, Rel. 18/19), or the like.

In a case where the UE does not support at least one of the specific UE capabilities described above or is not configured with the specific information, operation of Rel. 15/16 may be applied, for example.

(Supplementary Notes)

Regarding one embodiment (first embodiment) of the present disclosure, the following supplementary notes of the invention will be given.

{Supplementary Note 1}

A terminal including:

a receiving section that receives downlink control information including information related to a codebook subset indicating a precoder for up to four layers and a precoder for up to eight layers; and
a control section that judges, based on the precoder indicated by the information, a precoder for eight ports for an uplink transmission, wherein
a configuration is indicated in common for a configuration for the up to four layers and a configuration for the up to eight layers.

{Supplementary Note 2}

The terminal according to supplementary note 1, wherein for the configuration for the up to four layers and the configuration for the up to eight layers, a bit size of a specific field is indicated in common.

{Supplementary Note 3}

The terminal according to supplementary note 1 or 2, wherein for the configuration for the up to four layers and the configuration for the up to eight layers, a specific field is indicated in common.

{Supplementary Note 4}

The terminal according to any one of supplementary notes 1 to 3, wherein between the configuration for the up to four layers and the configuration for the up to eight layers, different bit sizes are indicated for a specific field.

(Supplementary Notes)

Regarding one embodiment (second embodiment) of the present disclosure, the following supplementary notes of the invention will be given.

{Supplementary Note 1}

A terminal including:

a receiving section that receives downlink control information including information related to a codebook subset indicating a precoder corresponding to a first sub-range including rank 1 to rank 4 and a precoder corresponding to a second sub-range including rank 5 to rank 8; and
a control section that judges, based on the precoder indicated by the information, a precoder for eight ports for an uplink transmission, wherein
the control section judges the precoder for eight ports by using a same codepoint for the first sub-range and the second sub-range.

{Supplementary Note 2}

The terminal according to supplementary note 1, wherein a bit size of a specific field is determined based on the maximum number of indications for the first sub-range or the second sub-range.

{Supplementary Note 3}

The terminal according to supplementary note 1 or 2, wherein the downlink control information includes a field A and a field B, the field A indicating a layer splitting case and the field B indicating, based on interpretation of the field A, specific one of the 2-port precoder.

{Supplementary Note 4}

The terminal according to any one of supplementary notes 1 to 3, wherein the first sub-range and the second sub-range are explicitly or implicitly indicated by the downlink control information.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

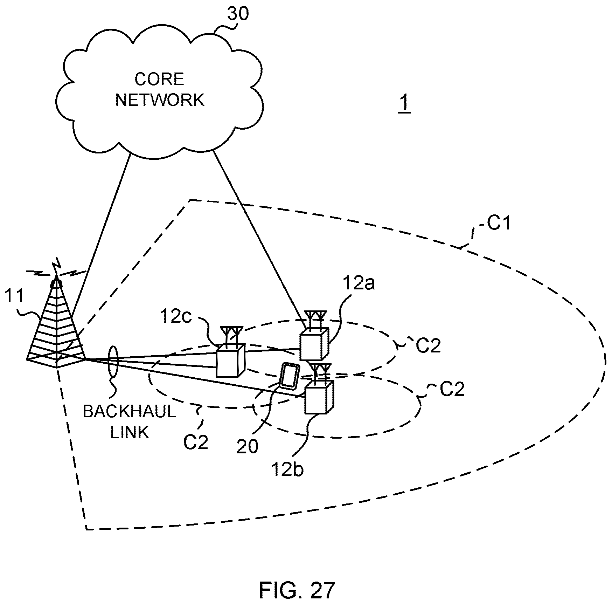

FIG. 27 is a diagram to show an example of a schematic structure of the radio communication system according to one embodiment. The radio communication system 1 (which may be simply referred to as system 1) may be a system implementing communication using Long Term Evolution (LTE), 5th generation mobile communication system New Radio (5G NR), or the like the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as a User Plane Function (UPF), an Access and Mobility management Function (AMF), a Session Management Function (SMF), Unified Data Management (UDM), an Application Function (AF), a Data Network (DN), a Location Management Function (LMF), and maintenance operation management (Operation, Administration and Maintenance (Management) (OAM)), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

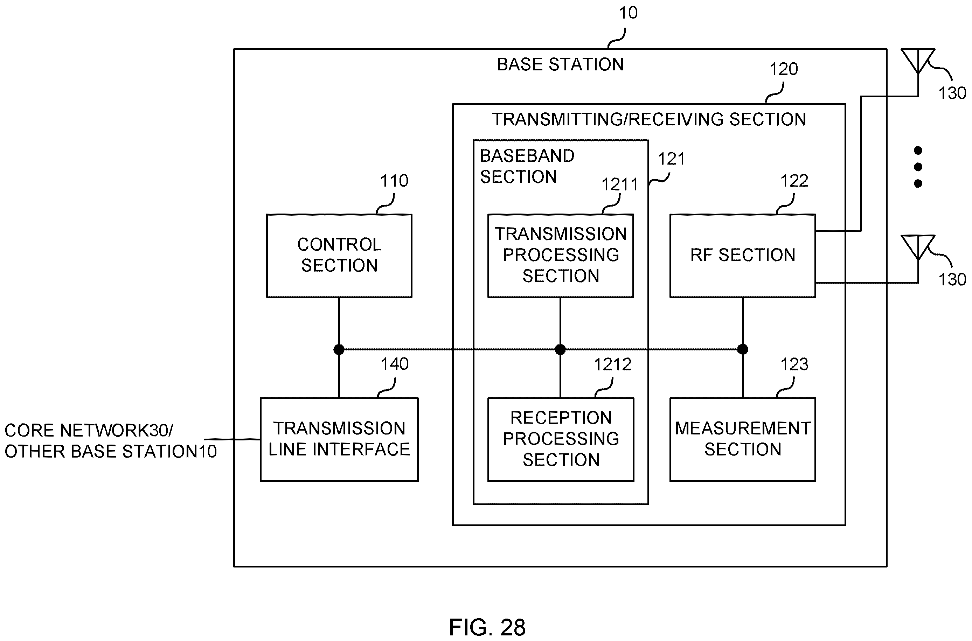

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing an NF), another base station 10, or the like to perform acquisition, transmission, or the like of user data (user plane data), control plane data, and the like for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information including information related to a codebook subset indicating a precoder for up to four layers and a precoder for up to eight layers. The transmitting/receiving section 120 may receive an uplink transmission using a precoder for eight ports judged based on the precoder indicated by the information. A configuration may be indicated in common for a configuration for the up to four layers and a configuration for the up to eight layers.

Note that the transmitting/receiving section 120 may transmit downlink control information including information related to a codebook subset indicating a precoder corresponding to a first sub-range including rank 1 to rank 4 and a precoder corresponding to a second sub-range including rank 5 to rank 8. The transmitting/receiving section 120 may receive an uplink transmission using a precoder for eight ports judged based on the precoder indicated by the information. The precoder for eight ports may be judged by using the same codepoint for the first sub-range and the second sub-range.

The control section 110 may control reception of the physical uplink shared channel.

(User Terminal)

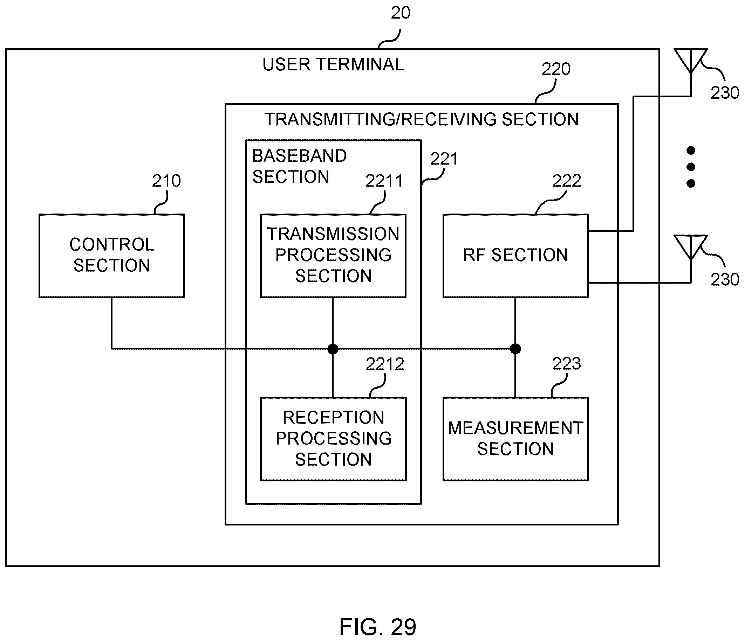

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. Examples of the resource for channel measurement may include a non-zero power (Non Zero Power (NZP)) CSI-RS resource. The measurement section 223 may derive interference measurement for CSI calculation, based on a resource for interference measurement. Such a resource for interference measurement may be at least one of an NZP CSI-RS resource for interference measurement, a CSI-interference measurement (CSI-IM) resource, and the like. Note that the CSI-IM may be referred to as CSI-interference management (CSI-IM) and that the CSI-IM and a zero power (ZP) CSI-RS may be interchangeably interpreted. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive downlink control information including information related to a codebook subset indicating a precoder for up to four layers and a precoder for up to eight layers. For the configuration for up to four layers and the configuration for up to eight layers, a bit size of a specific field may be indicated in common. For the configuration for up to four layers and the configuration for up to eight layers, a specific field may be indicated in common. Between the configuration for up to four layers and the configuration for up to eight layers, different bit sizes may be indicated for a specific field.

Note that the transmitting/receiving section 220 may receive downlink control information including information related to a codebook subset indicating a precoder corresponding to a first sub-range including rank 1 to rank 4 and a precoder corresponding to a second sub-range including rank 5 to rank 8. A bit size of a specific field may be determined based on the maximum number of indications for the first sub-range or the second sub-range. The downlink control information may include a field A and a field B, the field A indicating a layer splitting case and the field B indicating, based on interpretation of the field A, specific one of the 2-port precoder. The first sub-range and the second sub-range may be explicitly or implicitly indicated by the downlink control information.

The control section 210 may judge, based on the precoder indicated by the information, a precoder for eight ports for an uplink transmission.

The control section 210 may judge the precoder for eight ports by using the same codepoint for the first sub-range and the second sub-range.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

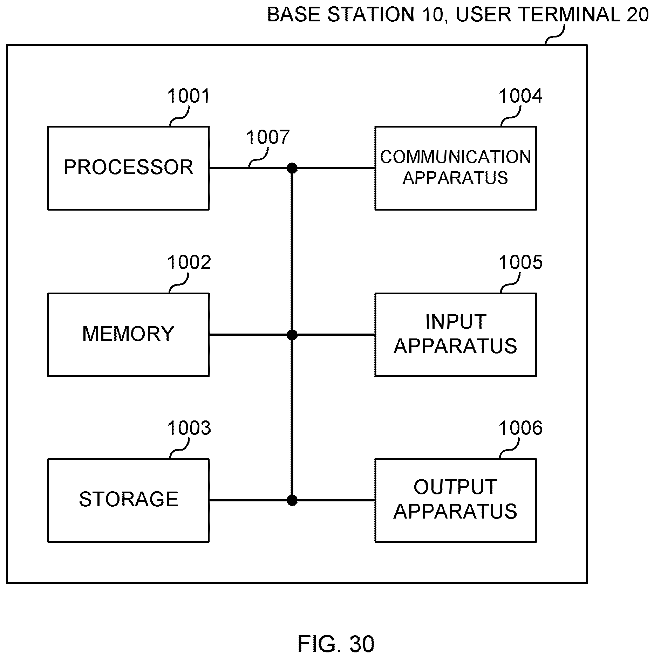

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

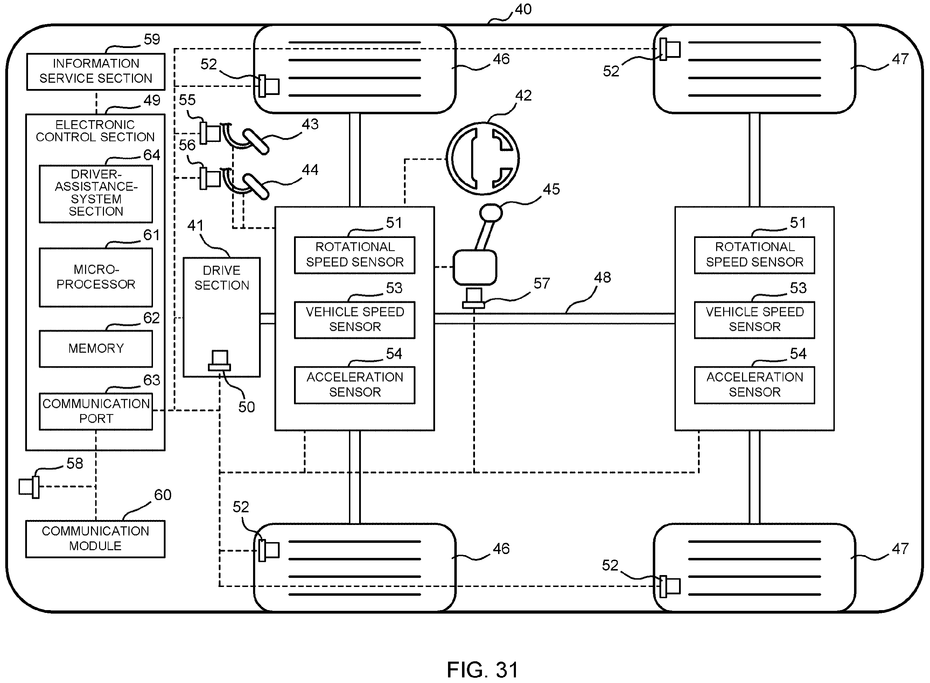

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1.    A terminal comprising:

a receiving section that receives downlink control information including information related to a codebook subset indicating a precoder for up to four layers and a precoder for up to eight layers; and
a control section that judges, based on the precoder indicated by the information, a precoder for eight ports for an uplink transmission, wherein
a configuration is indicated in common for a configuration for the up to four layers and a configuration for the up to eight layers.

2.    The terminal according to claim 1, wherein
for the configuration for the up to four layers and the configuration for the up to eight layers, a bit size of a specific field is indicated in common.

3.    The terminal according to claim 1, wherein
for the configuration for the up to four layers and the configuration for the up to eight layers, a specific field is indicated in common.

4.    The terminal according to claim 1, wherein
between the configuration for the up to four layers and the configuration for the up to eight layers, different bit sizes are indicated for a specific field.

5.    A radio communication method for a terminal, the radio communication method comprising:

receiving downlink control information including information related to a codebook subset indicating a precoder for up to four layers and a precoder for up to eight layers; and
judging, based on the precoder indicated by the information, a precoder for eight ports for an uplink transmission, wherein
a configuration is indicated in common for a configuration for the up to four layers and a configuration for the up to eight layers.

6.    A base station comprising:

a transmitting section that transmits downlink control information including information related to a codebook subset indicating a precoder for up to four layers and a precoder for up to eight layers; and
a receiving section that receives an uplink transmission using a precoder for eight ports judged based on the precoder indicated by the information, wherein
a configuration is indicated in common for a configuration for the up to four layers and a configuration for the up to eight layers.

FIG. 1

**W**
(ordered from left to right in increasing order of TPMI index)

| TPMI index | W (ordered from left to right in increasing order of TPMI index) | | | |
|---|---|---|---|---|
| 0 – 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 – 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-1\end{bmatrix}$ | $\frac{1}{2}\begin{bmatrix}1&0\\0&1\\j&0\\0&-j\end{bmatrix}$ |
| 8 – 11 | $\frac{1}{2}\begin{bmatrix}1&0\\0&1\\-1&0\\0&1\end{bmatrix}$ | $\frac{1}{2}\begin{bmatrix}1&0\\0&1\\-j&0\\0&j\end{bmatrix}$ | $\frac{1}{2}\begin{bmatrix}1&0\\0&1\\1&0\\0&1\end{bmatrix}$ | $\frac{1}{2}\begin{bmatrix}1&0\\0&1\\j&0\\0&j\end{bmatrix}$ |
| 12 – 15 | $\frac{1}{2}\begin{bmatrix}1&0\\0&1\\-1&0\\0&-1\end{bmatrix}$ | $\frac{1}{2}\begin{bmatrix}1&0\\0&1\\-j&0\\0&-j\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 – 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&-1\\1&-1\\1&1\\1&1\end{bmatrix}$ | $\frac{1}{2\sqrt{2}}\begin{bmatrix}1&-1\\-1&1\\j&-j\\-j&j\end{bmatrix}$ |
| 20 – 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

FIG. 2

| TPMI index | $W$ (ordered from left to right in increasing order of TPMI index) | | | |
|---|---|---|---|---|
| 0 – 3 | $\dfrac{1}{2}\begin{bmatrix} 1 & 0 & 0 \\ 0 & 1 & 0 \\ 0 & 0 & 1 \\ 0 & 0 & 0 \end{bmatrix}$ | $\dfrac{1}{2}\begin{bmatrix} 1 & 0 & 0 \\ 0 & 1 & 0 \\ 1 & 0 & 0 \\ 0 & 0 & 1 \end{bmatrix}$ | $\dfrac{1}{2}\begin{bmatrix} 1 & 0 & 0 \\ 0 & 1 & 0 \\ -1 & 0 & 0 \\ 0 & 0 & 1 \end{bmatrix}$ | $\dfrac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4 – 6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

FIG. 3

| TPMI index | $W$ (ordered from left to right in increasing order of TPMI index) | | | |
|---|---|---|---|---|
| 0 – 3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

FIG. 4

# FIG. 5A

| TPMI index | $W$ (ordered from left to right in increasing order of TPMI index) | | | | | | | |
|---|---|---|---|---|---|---|---|---|
| 0 – 5 | $\dfrac{1}{\sqrt{2}}\begin{bmatrix}1\\0\end{bmatrix}$ | $\dfrac{1}{\sqrt{2}}\begin{bmatrix}0\\1\end{bmatrix}$ | $\dfrac{1}{\sqrt{2}}\begin{bmatrix}1\\1\end{bmatrix}$ | $\dfrac{1}{\sqrt{2}}\begin{bmatrix}1\\-1\end{bmatrix}$ | $\dfrac{1}{\sqrt{2}}\begin{bmatrix}1\\j\end{bmatrix}$ | $\dfrac{1}{\sqrt{2}}\begin{bmatrix}1\\-j\end{bmatrix}$ | - | - |

# FIG. 5B

| TPMI index | $W$ (ordered from left to right in increasing order of TPMI index) | | | |
|---|---|---|---|---|
| 0 – 2 | $\dfrac{1}{\sqrt{2}}\begin{bmatrix}1&0\\0&1\end{bmatrix}$ | $\dfrac{1}{2}\begin{bmatrix}1&1\\1&-1\end{bmatrix}$ | $\dfrac{1}{2}\begin{bmatrix}1&1\\j&-j\end{bmatrix}$ | |

EP 4 693 924 A1

| Bit field mapped to index | codebookSubset = fullyAndPartialAndNonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| … | … | … | … | … | … |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| … | … | … | … | … | … |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| … | … | … | … | | |
| 19 | 1 layer: TPMI=11 | 19 | 1 layer: TPMI=11 | | |
| 20 | 2 layers: TPMI=6 | 20 | 2 layers: TPMI=6 | | |
| … | … | … | … | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| … | … | | | | |
| 47 | 1 layers: TPMI=27 | | | | |
| 48 | 2 layers: TPMI=14 | | | | |
| … | … | | | | |
| 55 | 2 layers: TPMI=21 | | | | |
| 56 | 3 layers: TPMI=3 | | | | |
| … | … | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

FIG. 6

FIG. 7A

| Bit field mapped to index | SRI(s), $N_{\mathrm{SRS}} = 2$ |
| --- | --- |
| 0 | 0 |
| 1 | 1 |

FIG. 7B

| Bit field mapped to index | SRI(s), $N_{\mathrm{SRS}} = 3$ |
| --- | --- |
| 0 | 0 |
| 1 | 1 |
| 2 | 2 |
| 3 | Reserved |

FIG. 7C

| Bit field mapped to index | SRI(s), $N_{\mathrm{SRS}} = 4$ |
| --- | --- |
| 0 | 0 |
| 1 | 1 |
| 2 | 2 |
| 3 | 3 |

| Ca se | Ng | (M, N, P) per group | Antenna Layout |
|---|---|---|---|
| 1 | 1 | (2, 2, 2), (1, 4, 2) | 1-a     1-b |
| 2 | 2 | (1, 2, 2) | 2-a     2-b |
| 3 | 4 | (1, 1, 2) | 3-a     3-b |

FIG. 8

## nonCoherent

| Bit field mapped to index | codebookSubset='nonCoherent' |
|---|---|
| 0 | 1 layer: TPMI 0 |
| .... | ... |
| $X_{NC,1} - 1$ | 1 layer: TPMI $X_{NC,1} - 1$ |
| $X_{NC,1}$ | 2 layer: TPMI 0 |
| ... | ... |
| $X_{NC,1} + X_{NC,2} - 1$ | 2 layer: TPMI $X_{NC,2} - 1$ |
| $X_{NC,1} + X_{NC,2}$ | 3 layer: TPMI 0 |
| ... | ... |
| $X_{NC,1} + X_{NC,2} + X_{NC,3} - 1$ | 3 layer: TPMI $X_{NC,3} - 1$ |
| $X_{NC,1} + X_{NC,2} + X_{NC,3}$ | 4 layer: TPMI 0 |
| ... | ... |
| $\sum_{i=1}^{4} X_{NC,i} - 1$ | 4 layer: TPMI $X_{NC,4} - 1$ |
| ... | 5 layer: TPMI 0 |
| ... | ... |
| $\sum_{i=1}^{5} X_{NC,i} - 1$ | 5 layer: TPMI $X_{NC,5} - 1$ |
| ... | 6 layer: TPMI 0 |
| ... | ... |
| $\sum_{i=1}^{6} X_{NC,i} - 1$ | 6 layer: TPMI $X_{NC,6} - 1$ |
| ... | 7 layer: TPMI 0 |
| ... | ... |
| $\sum_{i=1}^{7} X_{NC,i} - 1$ | 7 layer: TPMI $X_{NC,7} - 1$ |
| ... | 8 layer: TPMI 0 |
| ... | ... |
| $\sum_{i=1}^{8} X_{NC,i} - 1$ | 8 layer: TPMI $X_{NC,8} - 1$ |

| maxRank | Bit size |
|---|---|
| 8 | $\log_2(\sum_{i=1}^{8} X_{NC,i})$ |
| 7 | $\log_2(\sum_{i=1}^{7} X_{NC,i})$ |
| ... | ... |
| R | $\log_2(\sum_{i=1}^{R} X_{NC,i})$ |

**same**

## partialAndnonCoherent

| Bit field mapped to index | codebookSubset='partialAndNonCoherent' |
|---|---|
| 0 | 1 layer: TPMI 0 |
| .... | ... |
| $\sum_{i=1}^{8} X_{NC,i} - 1$ | 8 layer: $X_{NC,8} - 1$ |
| $\sum_{i=1}^{8} X_{NC,i}$ | 1 layer: TPMI $X_{NC,1}$ |
| ... | ... |
| $\sum_{i=1}^{8} X_{NC,i} + X_{PC,1} - 1$ | 1 layer: TPMI $X_{NC,1} + X_{PC,1} - 1$ |
| $\sum_{i=1}^{8} X_{NC,i} + X_{PC,1}$ | 2 layer: TPMI $X_{NC,2}$ |
| ... | ... |
| $\sum_{i=1}^{8} X_{NC,i} + X_{PC,1} + X_{PC,2} - 1$ | 2 layer: TPMI $X_{NC,2} + X_{PC,2} - 1$ |
| $\sum_{i=1}^{8} X_{NC,i} + X_{PC,1} + X_{PC,2}$ | 3 layer: TPMI $X_{NC,3}$ |
| ... | ... |
| $\sum_{i=1}^{8} X_{NC,i} + \sum_{j=1}^{3} X_{PC,j} - 1$ | 3 layer: TPMI $X_{NC,3} + X_{PC,3} - 1$ |
| $\sum_{i=1}^{8} X_{NC,i} + \sum_{j=1}^{3} X_{PC,j}$ | 4 layer: TPMI $X_{NC,4}$ |
| ... | ... |
| $\sum_{i=1}^{8} X_{NC,i} + \sum_{j=1}^{4} X_{PC,j} - 1$ | 4 layer: TPMI $X_{NC,4} + X_{PC,4} - 1$ |
| ... | ... |
| $\sum_{i=1}^{8} X_{NC,i} + \sum_{j=1}^{7} X_{PC,j}$ | 8 layer: TPMI $X_{NC,8}$ |
| ... | ... |
| $\sum_{i=1}^{8} X_{NC,i} + \sum_{j=1}^{8} X_{PC,j} - 1$ | 8 layer: TPMI $X_{NC,8} + X_{PC,8} - 1$ |

| maxRank | Bit size |
|---|---|
| 8 | $\log_2(\sum_{i=1}^{8} X_{NC,i} + \sum_{j=1}^{8} X_{PC,j})$ |
| 7 | $\log_2(\sum_{i=1}^{8} X_{NC,i} + \sum_{j=1}^{7} X_{PC,j})$ |
| ... | ... |
| R | $\log_2(\sum_{i=1}^{8} X_{NC,i} + \sum_{j=1}^{R} X_{PC,j})$ |

**same**

## fullyAndpartialAndnonCoherent

| Bit field mapped to index | codebookSubset='fullyAndPartialAndNonCoherent' |
|---|---|
| 0 | 1 layer: TPMI 0 |
| .... | ... |
| $\sum_{i=1}^{8} X_{NC,i} + \sum_{j=1}^{8} X_{PC,j} - 1$ | 8 layer: TPMI $X_{NC,8} + X_{PC,8} - 1$ |
| $\sum_{i=1}^{8} X_{NC,i} + \sum_{j=1}^{8} X_{PC,j}$ | 1 layer: TPMI $X_{NC,1} + X_{PC,1}$ |
| ... | ... |
| $\sum_{i=1}^{8} X_{NC,i} + \sum_{j=1}^{8} X_{PC,j} + X_{FC,1} - 1$ | 1 layer: TPMI $X_{NC,1} + X_{PC,1} + X_{FC,1} - 1$ |
| $\sum_{i=1}^{8} X_{NC,i} + \sum_{j=1}^{8} X_{PC,j} + X_{FC,1}$ | 2 layer: TPMI $X_{NC,2} + X_{PC,2}$ |
| ... | ... |
| $\sum_{i=1}^{8} X_{NC,i} + \sum_{j=1}^{8} X_{PC,j} + X_{FC,1} - 1$ | 2 layer: TPMI $X_{NC,2} + X_{PC,2} + X_{FC,2} - 1$ |
| $\sum_{i=1}^{8} X_{NC,i} + \sum_{j=1}^{8} X_{PC,j} + \sum_{k=1}^{2} X_{FC,j}$ | 3 layer: TPMI $X_{NC,3} + X_{PC,3}$ |
| ... | ... |
| $\sum_{i=1}^{8} X_{NC,i} + \sum_{j=1}^{8} X_{PC,j} + \sum_{k=1}^{3} X_{FC,j} - 1$ | 3 layer: TPMI $X_{NC,3} + X_{PC,3} + X_{FC,3} - 1$ |
| $\sum_{i=1}^{8} X_{NC,i} + \sum_{j=1}^{8} X_{PC,j} + \sum_{k=1}^{3} X_{FC,j}$ | 4 layer: TPMI $X_{NC,4} + X_{PC,4}$ |
| ... | ... |
| $\sum_{i=1}^{8} X_{NC,i} + \sum_{j=1}^{8} X_{PC,j} + \sum_{k=1}^{4} X_{FC,j} - 1$ | 4 layer: TPMI $X_{NC,4} + X_{PC,4} + X_{FC,4} - 1$ |
| ... | ... |
| $\sum_{i=1}^{8} X_{NC,i} + \sum_{j=1}^{8} X_{PC,j} + \sum_{k=1}^{7} X_{FC,j}$ | 8 layer: TPMI $X_{NC,8} + X_{PC,4}$ |
| ... | ... |
| $\sum_{i=1}^{8} X_{NC,i} + \sum_{j=1}^{8} X_{PC,j} + \sum_{k=1}^{8} X_{FC,j} - 1$ | 8 layer: TPMI $X_{NC,8} + X_{PC,8} + X_{FC,8} - 1$ |

| maxRank | Bit size |
|---|---|
| 8 | $\log_2(\sum_{i=1}^{8} X_{NC,i} + \sum_{j=1}^{8} X_{PC,j} + \sum_{k=1}^{8} X_{FC,k})$ |
| 7 | $\log_2(\sum_{i=1}^{8} X_{NC,i} + \sum_{j=1}^{7} X_{PC,j} + \sum_{k=1}^{7} X_{FC,k})$ |
| ... | ... |
| R | $\log_2(\sum_{i=1}^{8} X_{NC,i} + \sum_{j=1}^{R} X_{PC,j} + \sum_{k=1}^{R} X_{FC,k})$ |

## FIG. 9

## FIG. 10A

Precoding matrix $W$ for single-layer transmission
using eight antenna ports with transform precoding disabled

| TPMI index | $W$ | | | |
|---|---|---|---|---|
| $0 - (X_1 - 1)$ | ... | ... | ... | 'nonCoherent' |
| $X_1 - (X_1 + Y_1 - 1)$ | ... | ... | ... | 'partialCoherent' |
| $(X_1 + Y_1) - (X_1 + Y_1 + Z_1 - 1)$ | ... | ... | ... | 'fullyCoherent' |

## FIG. 10B

Precoding matrix $W$ for eight-layer transmission
using eight antenna ports with transform precoding disabled

| TPMI index | $W$ | | | |
|---|---|---|---|---|
| $0 - (X_8 - 1)$ | ... | ... | ... | 'nonCoherent' |
| $X_8 - (X_8 + Y_8 - 1)$ | ... | ... | ... | 'partialCoherent' |
| $(X_8 + Y_8) - (X_8 + Y_8 + Z_8 - 1)$ | ... | ... | ... | 'fullyCoherent' |

## FIG. 10C

| Bit field mapped to index | codebookSubset= fullyAndPartialAnd NonCoherent | Bit field mapped to index | codebookSubset= partialAndNonCoherent | Bit field mapped to index | codebookSubset= nonCoherent |
|---|---|---|---|---|---|
| 0 | ... | 0 | ... | 0 | ... |
| ... | ... | ... | ... | ... | ... |
| ... | ... | ... | ... | $2^{N1}$ | ... |
| ... | ... | ... | ... | ... | ... |
| ... | ... | $2^{N2}$ | ... | ... | ... |
| ... | ... | ... | ... | ... | ... |
| ... | ... | ... | ... | ... | ... |
| $2^{N3}$ | ... | ... | ... | ... | ... |

FULL-COHERENT PRECODER    PARTIAL-COHERENT PRECODER    NON-COHERENT PRECODER

FIG. 11A   New table #1A: Precoding matrix $W$ for single-layer transmission using eight antenna ports with transform precoding disabled, for non-coherent precoders

| TPMI index | $W$ | | |
|---|---|---|---|
| $0 - (X_1 - 1)$ | ... | ... | ... |

'nonCoherent'

FIG. 11B   New table #1B: Precoding matrix $W$ for single-layer transmission using eight antenna ports with transform precoding disabled, for partially-coherent precoders

| TPMI index | $W$ | | |
|---|---|---|---|
| $0 - (Y_1 - 1)$ | ... | ... | ... |

'partialCoherent'

FIG. 11C   New table #1C: Precoding matrix $W$ for single-layer transmission using eight antenna ports with transform precoding disabled, for fully-coherent precoders

| TPMI index | $W$ | | |
|---|---|---|---|
| $0 - (Z_1 - 1)$ | ... | ... | ... |

'fullyCoherent'

FIG. 11D   New table #8A: Precoding matrix $W$ for eight-layer transmission using eight antenna ports with transform precoding disabled, for non-coherent precoders

| TPMI index | $W$ | | |
|---|---|---|---|
| $0 - (X_8 - 1)$ | ... | ... | ... |

'nonCoherent'

FIG. 11E   New table #8B: Precoding matrix $W$ for eight-layer transmission using eight antenna ports with transform precoding disabled, for partially-coherent precoders

| TPMI index | $W$ | | |
|---|---|---|---|
| $0 - (Y_8 - 1)$ | ... | ... | ... |

'partialCoherent'

FIG. 11F   New table #8C: Precoding matrix $W$ for eight-layer transmission using eight antenna ports with transform precoding disabled, for fully-coherent precoders

| TPMI index | $W$ | | |
|---|---|---|---|
| $0 - (Z_8 - 1)$ | ... | ... | ... |

'fullyCoherent'

FIG. 12A

| Bit field mapped to index | codebookSubset=nonCoherent |
|---|---|
| 0 | 1 layer, TPMI 0 from table#1A |
| ... | Layer indication, one TPMI index (from precoding matrix tables for non-coherent precoders, i.e., tables#1A, #2A, ...,#8A) |

FIG. 12B

| Bit field mapped to index | codebookSubset=fullyCoherent |
|---|---|
| 0 | 1 layer, TPMI 0 from table#1C |
| ... | Layer indication, one TPMI index (from precoding matrix tables for fully-coherent precoders, i.e., tables#1C, #2C, ...,#8C) |

FIG. 12C

| Bit field mapped to index | codebookSubset=partialCoherent |
|---|---|
| 0 | 1 layer, TPMI 0 from table#1B |
| ... | Layer indication, one TPMI index (from precoding matrix tables for partially-coherent precoders, i.e., tables#1B, #2B, ...,#8B) |

FIG. 12D

| Bit field mapped to index | codebookSubset= fullyCoherent | Bit field mapped to index | codebookSubset= partialCoherent | Bit field mapped to index | codebookSubset= nonCoherent |
|---|---|---|---|---|---|
| 0 | ... | 0 | ... | 0 | ... |
| ... | ... | ... | ... | ... | ... |
| ... | ... | ... | ... | $2^{N1}$ | ... |
| ... | ... | $2^{N4}$ | ... | ... | ... |
| $2^{N5}$ | ... | ... | ... | ... | ... |

FULL-COHERENT PRECODER        PARTIAL-COHERENT PRECODER        NON-COHERENT PRECODER

| Bit field mapped to index | codebookSubset= fullyCoherent | Bit field mapped to index | codebookSubset= partialCoherent with Ng=2 | Bit field mapped to index | codebookSubset= partialCoherent with Ng=4 | Bit field mapped to index | codebookSubset= nonCoherent |
|---|---|---|---|---|---|---|---|
| 0 | ... | 0 | ... | 0 | ... | 0 | ... |
| ... | ... | ... | ... | ... | ... | ... | ... |
| ... | ... | ... | ... | ... | ... | $2^{N1}$ | ... |
| ... | ... | $2^{N4\_Ng2}$ | ... | ... | ... | | |
| ... | ... | | | $2^{N4\_Ng4}$ | ... | | |
| $2^{N5}$ | ... | | | | | | |

FULL-COHERENT PRECODER

PARTIAL-COHERENT PRECODER for Ng=2

PARTIAL-COHERENT PRECODER for Ng=4

NON-COHERENT PRECODER

FIG. 13

EP 4 693 924 A1

FIG. 14A

$$\frac{1}{\sqrt{8}} \begin{pmatrix} 1 & 0 & 1 \\ 0 & 1 & 0 \\ 1 & 0 & 0 \\ 0 & 0 & 1 \\ 0 & 0 & 0 \\ 0 & 0 & 0 \\ 0 & 0 & 0 \\ 0 & 0 & 0 \end{pmatrix} \quad \frac{1}{\sqrt{8}} \begin{pmatrix} 1 & 0 & 0 \\ 0 & 1 & 0 \\ -1 & 0 & 0 \\ 0 & 0 & 1 \\ 0 & 0 & 0 \\ 0 & 0 & 0 \\ 0 & 0 & 0 \\ 0 & 0 & 0 \end{pmatrix} \quad \begin{bmatrix} W_{4TX} \\ W_0 \end{bmatrix}$$

FIG. 14B

$$\frac{1}{4\sqrt{2}} \begin{pmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 1 \\ 0 & 0 & 0 & 0 & 1 & 1 \\ 0 & 0 & 0 & 0 & 1 & -1 \\ 0 & 0 & 0 & 0 & 1 & -1 \end{pmatrix} \quad \begin{bmatrix} W_{4TX,\,1} & W_0 \\ W_0 & W_{4TX,\,2} \end{bmatrix}$$

FIG. 15A

$$\frac{1}{4}\begin{pmatrix} 1 & 1 & 0 & 0 \\ 1 & -1 & 0 & 0 \\ 0 & 0 & 0 & 0 \\ 0 & 0 & 0 & 0 \\ 0 & 0 & 0 & 0 \\ 0 & 0 & 0 & 0 \\ 0 & 0 & 1 & 1 \\ 0 & 0 & 1 & -1 \end{pmatrix}\begin{bmatrix} W_{2TX,\,1} & W_0 \\ W_0 & W_0 \\ W_0 & W_0 \\ W_0 & W_{2TX,\,2} \end{bmatrix} \qquad \frac{1}{4}\begin{pmatrix} 1 & 1 & 0 & 0 \\ 1 & -1 & 0 & 0 \\ 0 & 0 & 1 & 1 \\ 0 & 0 & j & -j \\ 0 & 0 & 0 & 0 \\ 0 & 0 & 0 & 0 \\ 0 & 0 & 0 & 0 \\ 0 & 0 & 0 & 0 \end{pmatrix}\begin{bmatrix} W_{2TX,\,1} & W_0 \\ W_0 & W_{2TX,\,2} \\ W_0 & W_0 \\ W_0 & W_0 \end{bmatrix}$$

FIG. 15B

$$\frac{1}{4}\begin{pmatrix} 1 & 1 & 0 & 0 & 0 & 0 & 0 & 0 \\ 1 & -1 & 0 & 0 & 0 & 0 & 0 & 0 \\ 0 & 0 & 1 & 1 & 0 & 0 & 0 & 0 \\ 0 & 0 & 1 & -1 & 0 & 0 & 0 & 0 \\ 0 & 0 & 0 & 0 & 1 & 1 & 0 & 0 \\ 0 & 0 & 0 & 0 & 1 & -1 & 0 & 0 \\ 0 & 0 & 0 & 0 & 0 & 0 & 1 & 1 \\ 0 & 0 & 0 & 0 & 0 & 0 & 1 & -1 \end{pmatrix}\begin{bmatrix} W_{2TX,\,1} & W_0 & W_0 & W_0 \\ W_0 & W_{2TX,\,2} & W_0 & W_0 \\ W_0 & W_0 & W_{2TX,\,3} & W_0 \\ W_0 & W_0 & W_0 & W_{2TX,\,4} \end{bmatrix}$$

FIG. 16A

|  | FC | PC | NC | TOTAL |
|---|---|---|---|---|
| RANK = 1 | 16 | 8 | 4 | 28 |
| RANK = 2 | 8 | 8 | 6 | 22 |
| RANK = 3 | 4 | 2 | 1 | 7 |
| RANK = 4 | 2 | 2 | 1 | 5 |

FIG. 16B

|  | FC | NC | TOTAL |
|---|---|---|---|
| RANK = 1 | 4 | 2 | 6 |
| RANK = 2 | 2 | 1 | 3 |

| Bit field mapped to index | codebookSubset = fullyAndPartialAndNonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| ... | ... | ... | ... | | |
| 19 | 1 layer: TPMI=11 | 19 | 1 layer: TPMI=11 | | |
| 20 | 2 layers: TPMI=6 | 20 | 2 layers: TPMI=6 | | |
| ... | ... | ... | ... | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| ... | ... | | | | |
| 47 | 1 layers: TPMI=27 | | | | |
| 48 | 2 layers: TPMI=14 | | | | |
| ... | ... | | | | |
| 55 | 2 layers: TPMI=21 | | | | |
| 56 | 3 layers: TPMI=3 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

PRECODER A

$$\frac{1}{2}\begin{bmatrix} 1 & 0 \\ 0 & 1 \\ 0 & 0 \\ 0 & 0 \end{bmatrix}$$

PRECODER B

$$\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

PRECODER C

$$\begin{bmatrix} W_{4TX,\,i,\,j} & W_0 \\ W_0 & W_{4TX,\,m,\,n} \end{bmatrix} = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \\ 0 & 0 & 0 & 0 & 0 & 0 \\ 0 & 0 & 0 & 0 & 0 & 0 \end{bmatrix}$$

FIG. 17

## FIG. 18A

| i-bit for 1$^{st}$ Antenna group | i-bit for 2$^{nd}$ Antenna group |
|---|---|

## FIG. 18B

| Field A for layer splitting case indication (x, y) | Field B interpretation based on indication of Field A (one or two TPMI indications for the one or two non-zero layers indicated by Field A) |
|---|---|

EP 4 693 924 A1

| Bit field mapped to index | codebookSubset= partialCoherent with Ng=2 |
|---|---|
| 0 | 1 layer, TPMI 0 |
| 1 | 1 layer, TPMI 1 |
| ... | ... |
| M | 4 layer, TPMI a |
| M+1 | 5 layer, TPMI b |
| ... | ... |
| $2^{Ng2}$ | ... |
| | |
| | |

PARTIAL-COHERENT PRECODER
for Ng=2

FIG. 19

EP 4 693 924 A1

| i-bit for 1$^{st}$ Antenna group | i-bit for 2$^{nd}$ Antenna group | i-bit for 3$^{rd}$ Antenna group | i-bit for 4$^{th}$ Antenna group |
|---|---|---|---|

FIG. 20

| | layer split | Field A |
|---|---|---|
| Rank=1 | (1,0) | 0 |
| | (0,1) | 1 |
| Rank=2 | (2,0) | 2 |
| | (0,2) | 3 |
| | (1,1) | 4 |
| Rank=3 | (3,0) | 5 |
| | (0,3) | 6 |
| | (2,1) | 7 |
| | (1,2) | 8 |
| Rank=4 | (4,0) | 9 |
| | (0,4) | 10 |
| | (2,2) | 11 |
| Rank=5 | (3,2) | 12 |
| | (2,3) | 13 |
| Rank=6 | (3,3) | 14 |
| Rank=7 | (4,3) | 15 |
| | (3,4) | 16 |
| Rank=8 | (4,4) | 17 |

FIG. 21

# FIG. 22A

| Bit field mapped to index | codebookSubset= nonCoherent or fullCoherent |
|---|---|
| 0 | 1 layer, TPMI 0 |
| 1 | 1 layer, TPMI 1 |
| ... | ... |
| M | 4 layer, TPMI a |
| M+1 | 5 layer, TPMI b |
| ... | ... |
| $2^N$ | 8 layer, TPMI z |
| | |
| | |

# FIG. 22B

| Bit field mapped to index | codebookSubset= fullCoherent |
|---|---|
| 0 | 1 layer, (0,0,0) |
| 1 | 1 layer, (0,0,1) |
| ... | ... |
| M | 4 layer, (a,b,c) |
| M+1 | 5 layer, (d,e,f) |
| ... | ... |
| $2^N$ | 8 layer, (x,y,z) |
| | |
| | |

## FIG. 23A

codebookSubset = partialCoherent with Ng=2

| 1st field (joint layer and TPMI for 4TX precoders) for 1st antenna group | 2nd field for 2nd antenna group |
|---|---|

## FIG. 23B

codebookSubset = partialCoherent with Ng=4

| Field A for layer splitting case indication (a,b,c,d) | Field B interpretation based on indication of Field A ( one or two or three or four TPMI indications for the one or two or three or four non-zero layers indicated by Field A) |
|---|---|

| Bit field mapped to index | codebookSubset= partialCoherent with Ng=2, in caseof one TB is disabled (rank1-4) | codebookSubset= partialCoherent with Ng=2, in caseof one TB is disabled (rank5-8) |
|---|---|---|
| 0 | 1 layer, TPMI 0 | 5 layer, TPMI b |
| 1 | 1 layer, TPMI 1 | 5 layer, TPMI b+1 |
| ... | ... | ... |
| ... | ... | 8 layer, TPMI k |
| $2^{M1}$ | 4 layer, TPMI a | |
| | | |

## FIG. 24

| codebookSubset='partialCoherent' with Ng=2, in case of one TB is disabled (rank1~4) | codebookSubset='partialCoherent' with Ng=2, in case of two TBs are scheduled (rank5-8) | Field A |
|---|---|---|
| layer split cases | layer split cases | |
| (1,0) | (3,2) | 0 |
| (0,1) | (2,3) | 1 |
| (2,0) | (3,3) | 2 |
| (0,2) | (4,3) | 3 |
| (1,1) | (3,4) | 4 |
| (3,0) | (4,4) | 5 |
| (0,3) | - | 6 |
| (2,1) | - | 7 |
| (1,2) | - | 8 |
| (4,0) | - | 9 |
| (0,4) | - | 10 |
| (2,2) | - | 11 |

FIG. 25

EP 4 693 924 A1

| codebookSubset='partialCoherent' with Ng=4, in case of one TB is disabled (rank1~4) | codebookSubset='partialCoherent' with Ng=4, in case of two TBs are scheduled (rank5-8) | Field A |
|---|---|---|
| layer split cases | layer split cases | |
| (1,0,0,0) and its permutations (4 permutations) | (2,1,1,1) and its permutations (4 permutations) | 0-3 |
| (2,0,0,0) and its permutations (4 permutations) (1,1,0,0) and its permutations (6 permutations) (2,1,0,0) and its permutations (12 permutations) | (2,2,1,0) and its permutations (12 permutations) (2,2,2,0) and its permutations (4 permutations) (2,2,1,1) and its permutations (6 permutations) | 4-25 |
| (1,1,1,0) and its permutations (4 permutations) | (2,2,2,1) and its permutations (4 permutations) | 26-29 |
| (2,2,0,0) and its permutations (6 permutations) | (2,2,2,2) | 30-35 |
| (2,1,1,0) and its permutations (12 permutations) | - | 36-47 |
| (1,1,1,1) | - | 48 |

FIG. 26

EP 4 693 924 A1

FIG. 27

FIG. 28

FIG. 29

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 30

FIG. 31

EP 4 693 924 A1

## INTERNATIONAL SEARCH REPORT

| International application No. |
|---|
| **PCT/JP2023/014136** |

### A. CLASSIFICATION OF SUBJECT MATTER

*H04B 7/0456*(2017.01)i
FI:  H04B7/0456 300

According to International Patent Classification (IPC) or to both national classification and IPC

### B. FIELDS SEARCHED

Minimum documentation searched (classification system followed by classification symbols)

H04B7/0456

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CATT. On SRI/TPMI enhancement for 8TX UL transmission [online]. 3GPP TSG RAN WG1 #112 R1-2300656. 17 February 2023<br>section 2 | 1-6 |
| A | NTT DOCOMO, INC. Discussion on 8TX UL transmission [online]. 3GPP TSG RAN WG1 #112 R1-2301483. 17 February 2023<br>p. 12 | 1-6 |
| A | INTEL CORPORATION. Discussion on enhancement for 8Tx UL transmission [online]. 3GPP TSG RAN WG1 #112 R1-2300938. 17 February 2023<br>p. 9 | 1-6 |
| A | WO 2023/002610 A1 (NTT DOCOMO, INC.) 26 January 2023 (2023-01-26)<br>entire text, all drawings | 1-6 |
| A | JP 2013-540401 A (SAMSUNG ELECTRONICS CO., LTD.) 31 October 2013 (2013-10-31)<br>entire text, all drawings | 1-6 |
| A | JP 2020-509677 A (LG ELECTRONICS INC.) 26 March 2020 (2020-03-26)<br>entire text, all drawings | 1-6 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/014136**

| Patent document cited in search report | | | Publication date (day/month/year) | Patent family member(s) | | | Publication date (day/month/year) |
|---|---|---|---|---|---|---|---|
| WO | 2023/002610 | A1 | 26 January 2023 | (Family: none) | | | |
| JP | 2013-540401 | A | 31 October 2013 | US | 2012/0082248 | A1 | |
| | | | | whole document | | | |
| | | | | EP | 2437408 | A1 | |
| | | | | KR | 10-2012-0038366 | A | |
| | | | | CN | 103222201 | A | |
| JP | 2020-509677 | A | 26 March 2020 | US | 2020/0083939 | A1 | |
| | | | | whole document | | | |
| | | | | EP | 3562052 | A1 | |
| | | | | KR | 10-2018-0135874 | A | |
| | | | | CN | 110463066 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010